(19) Europäisches Patentamt
European Patent Office
Office européen des brevets

(11) EP 4 154 712 A1

(12) EUROPEAN PATENT APPLICATION
published in accordance with Art. 153(4) EPC

(43) Date of publication:
29.03.2023 Bulletin 2023/13

(21) Application number: 21808077.8

(22) Date of filing: 18.05.2021

(51) International Patent Classification (IPC):
A01N 27/00 (2006.01)    A01N 31/02 (2006.01)
A01N 31/08 (2006.01)    A01N 31/14 (2006.01)
A01N 33/04 (2006.01)    A01N 35/02 (2006.01)
A01N 37/10 (2006.01)    A01P 17/00 (2006.01)
A01N 65/44 (2009.01)    A01M 29/12 (2011.01)
A01N 43/08 (2006.01)    A01N 43/36 (2006.01)
A01N 43/40 (2006.01)    A01N 43/78 (2006.01)

(52) Cooperative Patent Classification (CPC):
A01M 29/12; A01N 27/00; A01N 31/02;
A01N 31/08; A01N 31/14; A01N 33/04;
A01N 35/02; A01N 37/10; A01N 43/08;
A01N 43/36; A01N 43/40; A01N 43/78;
A01N 65/44; A01P 17/00; Y02A 50/30

(86) International application number:
PCT/JP2021/018733

(87) International publication number:
WO 2021/235422 (25.11.2021 Gazette 2021/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.05.2020  JP 2020087578
22.02.2021  JP 2021026392

(71) Applicant: Earth Corporation
Tokyo 101-0048 (JP)

(72) Inventors:
• MAEDA, Kazuki
  Ako City, Hyogo 6780192 (JP)
• ABE, Ren
  Ako City, Hyogo 6780192 (JP)

(74) Representative: Grünecker Patent- und
Rechtsanwälte
PartG mbB
Leopoldstraße 4
80802 München (DE)

(54) HONEYBEE REPELLENT

(57) An object is to provide a honeybee repellent for the prevention, in the use of pesticides applied on agricultural crops as well as controlling agents for exterminating carnivorous bees such as hornets and paper wasps, of damage inflicted on honeybees, the extermination of which is not intended by these agents. As a solution, a honeybee repellent is provided whose active ingredient comprises one or more types selected from tetradecane, furfuryl alcohol, cinnamyl alcohol, cinnamaldehyde, 3-methyl-2-butenal, methyl cinnamate, geranyl formate, allyl cyclohexanepropionate, isoquinoline, borneol, carvacrol, δ-dodecalactone, β-ionone, quinoline, butylamine, and citronella oil.

[FIG. 1]

**Description**

**Technical Field**

The present invention relates to a honeybee repellent. To be specific, it relates to a honeybee repellent whose active ingredient comprises a component having a specific chemical structure.

**Background Art**

In Japan, two species of honeybees, namely Japanese honeybees and western honeybees, are bred (apiculture) to harvest honey, while bumblebees and other honeybees are widely used for pollination of agricultural crops. In this respect, honeybees serve as "beneficial insects" that are useful to humans in various ways.

However, pesticide spraying in agricultural areas is causing great damage by extermination of honeybees by contacting pesticides directly or indirectly; in particular, great harm to honeybees has been reported that is caused by spraying of pesticides to rid rice crops of stink bugs. Also, trap agents, bait agents, and other controlling agents used to exterminate carnivorous bees such as hornets and paper wasps can attract and exterminate honeybees. Accordingly, method of application, location of application, etc., require caution when using pesticides as well as trap agents, bait agents, and other controlling agents in order to prevent harm to honeybees, the extermination of which is not intended by these agents; however, sufficient effects have not been achieved to prevent harm to honeybees that are consequently exterminated. In addition, while repellents against insects including bees have been proposed (such as Patent Literatures 1 and 2, for example), no art is yet known that adds honeybee repelling effect to pesticides and controlling agents to achieve a sufficient effect of repelling honeybees.

**Background Art Literature**

**Patent Literature**

Patent Literature 1: Japanese Patent Laid-open No. 2019-199439
Patent Literature 2: Japanese Patent Laid-open No. 2019-069934

**Summary of the Invention**

**Problems to Be Solved by the Invention**

An object of the present invention is to provide a honeybee repellent for the prevention, in the use of pesticides applied on agricultural crops as well as controlling agents for exterminating carnivorous bees such as hornets and paper wasps, of damage inflicted on honeybees, the extermination of which is not intended by these agents.

**Means for Solving the Problems**

After studying in earnest to achieve the aforementioned object, the inventor of the present invention found that a specific component would repel honeybees specifically, and therefore achieved the aforementioned object.

To be specific, the key points of the present invention are as follows:

1. A honeybee repellent whose active ingredient comprises one or more types selected from tetradecane, furfuryl alcohol, cinnamyl alcohol, cinnamaldehyde, 3-methyl-2-butenal, methyl cinnamate, geranyl formate, allyl cyclohexanepropionate, isoquinoline, borneol, carvacrol, $\delta$-dodecalactone, $\beta$-ionone, quinoline, butylamine, and citronella oil.

2. A method for repelling honeybees that uses, as an active ingredient, one or more types selected from tetradecane, furfuryl alcohol, cinnamyl alcohol, cinnamaldehyde, 3-methyl-2-butenal, methyl cinnamate, geranyl formate, allyl cyclohexanepropionate, isoquinoline, borneol, carvacrol, $\delta$-dodecalactone, $\beta$-ionone, quinoline, butylamine, and citronella oil.

3. A honeybee repellent whose active ingredient comprises one or more types selected from (a) to (e) below:

(a) straight-chain alkanes of carbon number 6 to 19
(b) furan compounds
(c) furanone compounds with unsaturated bonds

(d) pyrrole compounds of carbon number 6 or greater
(e) aliphatic alcohols.

4. A method for repelling honeybees that uses, as an active ingredient, one or more types selected from (a) to (e) below:

(a) straight-chain alkanes of carbon number 6 to 19
(b) furan compounds
(c) furanone compounds with unsaturated bonds
(d) pyrrole compounds of carbon number 6 or greater
(e) aliphatic alcohols.

**Effects of the Invention**

The honeybee repellent proposed by the present invention, when blended into a trap agent, bait agent, or other controlling agent for exterminating carnivorous bees such as hornets and paper wasps, can prevent honeybees from being attracted to and therefore exterminated by such controlling agent, and still achieve an effect of exterminating carnivorous bees such as hornets and paper wasps.

Also, the honeybee repellent proposed by the present invention is useful in that, when combined with a pesticide applied on agricultural crops, it demonstrates an effect of keeping honeybees from approaching the treated agricultural crops and thus preventing damage by extermination of honeybees by contacting the pesticide directly or indirectly.

**Brief Description of the Drawings**

[FIG. 1] A perspective view showing the feeding station in "Tests for Confirmation of Honeybee Repelling Effect" in the Examples.
[FIG. 2] A cross-sectional view showing the feeding station in "Tests for Confirmation of Honeybee Repelling Effect" in the Examples.

**Description of the Symbols**

10:    Feeding station
11:    Lid of KP cup
12:    Cut
13:    Cotton wool
14:    KP cup
15:    Disposable wooden chopstick (landing area)

**Mode for Carrying Out the Invention**

The honeybee repellent proposed by the present invention is explained in detail below.

<Honeybees>

Under the present invention, "honeybees" refers to insects belonging to the Apidae family of Hymenoptera order, examples of which include Japanese honeybees, western honeybees, bumblebees, stingless bees, giant honeybees, Himalayan giant honeybees, dwarf honeybees, red dwarf honeybees, black dwarf honeybees, eastern honeybees and Koschevnikov's honeybees, among others.

The active ingredient of the honeybee repellent proposed by the present invention is explained.

<(a) Straight-chain Alkanes with 6 to 19 Carbon Atoms>

"(a) Straight-chain alkanes with 6 to 19 carbon atoms" are one active ingredient of the honeybee repellent proposed by the present invention.

The "(a) straight-chain alkanes with 6 to 19 carbon atoms" include hexane (6 carbon atoms), heptane (7 carbon atoms), octane (8 carbon atoms), nonane (9 carbon atoms), decane (10 carbon atoms), undecane (11 carbon atoms), dodecane (12 carbon atoms), tridecane (13 carbon atoms), tetradodecane (14 carbon atoms), pentadecane (15 carbon atoms), hexadecane (16 carbon atoms), heptadecane (17 carbon atoms), octadecane (18 carbon atoms) and nonadecane (19 carbon atoms).

Among these, straight-chain alkanes with 8 to 14 carbon atoms are preferred for the active ingredient of the honeybee repellent proposed by the present invention. Furthermore, straight-chain alkanes with 8 to 14 carbon atoms have a property of not repelling stink bugs and other injurious insects to be exterminated.

<(b) Furan Compounds>

"(b) Furan compounds" are one active ingredient of the honeybee repellent proposed by the present invention.

The "(b) furan compounds" refers to monocyclic compounds having a 1-oxa-2,4-cyclopentadiene skeleton, and tetrahydrofuran compounds are not included. As the (b) furan compounds, furan compounds substituted by a carbonyl group, hydroxyl group, or other chemical group having one or more oxygen atoms are preferred. Also, furan compounds with a total of 10 or fewer carbon atoms are preferred, where furan compounds with eight or fewer carbon atoms are more preferred.

<(c) Furanone Compounds with Unsaturated Bonds>

"(c) Furanone compounds" with unsaturated bonds are one active ingredient of the honeybee repellent proposed by the present invention.

The "(c) furanone compounds" with unsaturated bonds refers to compounds having a chemical structure in which a furan ring has unsaturated bonds in it while the carbon atoms forming the ring have been substituted by a carbonyl group, and compounds having a tetrahydrofuran skeleton are not included. As the (c) furanone compounds with unsaturated bonds, furanone compounds with unsaturated bonds having a total of 10 or fewer carbon atoms are preferred, where furanone compounds with unsaturated bonds having eight or fewer carbon atoms are more preferred.

<(d) Pyrrole Compounds with 6 or More Carbon Atoms>

"(d) Pyrrole compounds with 6 or more carbon atoms" are one active ingredient of the honeybee repellent proposed by the present invention.

The "(d) pyrrole compounds with 6 or more carbon atoms" refers to compounds having a pyrrole skeleton. As the (d) pyrrole compounds with 6 or more carbon atoms, pyrrole compounds substituted by a carbonyl group, hydroxyl group, or other chemical group having one or more oxygen atom are preferred. Also, pyrrole compounds with a total of 15 or fewer carbon atoms are preferred, where pyrrole compounds with 13 or fewer carbon atoms are more preferred.

<(e) Aliphatic Alcohols>

"(e) Aliphatic alcohols" are one active ingredient of the honeybee repellent proposed by the present invention.

The "(e) aliphatic alcohols" refers to aliphatic alcohols having one hydroxy group on its terminal carbon, and straight-chain or branched aliphatic alcohols and saturated or unsaturated aliphatic alcohols are included. As the (e) aliphatic alcohols, saturated aliphatic alcohols are preferred. Also, aliphatic alcohols with a total of 3 6 or fewer carbon atoms are preferred, where aliphatic alcohols with 22 or fewer carbon atoms are more preferred. Furthermore, aliphatic alcohols with a total of four or more carbon atoms are preferred.

The active ingredient of the honeybee repellent proposed by the present invention is not limited to the compounds belonging to (a) to (e) above. In the Examples below, where the honeybee repelling effects, etc., are explained in detail, the following groups of compounds also provide active ingredients of the honeybee repellent proposed by the present invention.

<Group A-1>

Tetradecane (a), furfuryl alcohol (b), cinnamyl alcohol, cinnamaldehyde, 3-methyl-2-butenal, methyl cinnamate, geranyl formate, allyl cyclohexanepropionate, and isoquinoline.

This "group A-1" is an active-ingredient group conforming to the present invention, demonstrating a superior effect of repelling honeybees (90% or higher repellency rate) while not repelling injurious insects to be exterminated, such as stink bugs, other than honeybees.

<Group A-2>

Furfural (b), anisaldehyde, perillaldehyde, hydroxycitronellal, n-octanal, citronellyl acetate, ethyl octanoate, 2'-acetonaphthone, acetophenone, $\alpha$-ionone, and 4-methoxystyrene.

This "group A-2" is an active-ingredient group conforming to the present invention, demonstrating a superior effect of repelling honeybees (90% or higher repellency rate) similar to "group A-1."

<Group B-1>

Tetradecane (a), furfuryl alcohol (b), cinnamyl alcohol, cinnamaldehyde, 3-methyl-2-butenal, methyl cinnamate, geranyl formate, allyl cyclohexanepropionate, isoquinoline, borneol, carvacrol, $\delta$-dodecalactone, $\beta$-ionone, quinoline, butylamine, and citronella oil.

This "group B-1" is an active-ingredient group conforming to the present invention, demonstrating a remarkable effect of repelling honeybees (80% or higher repellency rate) while not repelling injurious insects to be exterminated, such as stink bugs, other than honeybees.

<Group B-2>

Furfural (b), anisaldehyde, perillaldehyde, hydroxycitronellal, n-octanal, citronellyl acetate, ethyl octanoate, 2'-acetonaphthone, acetophenone, $\alpha$-ionone, 4-methoxystyrene, 1-dodecanol (e), 2-methyl-1-propanol (isobutanol) (e), methionol, propyl 4-hydroxybenzoate, benzyl acetate, isobutyl phenylacetate, terpinyl acetate, 2,3,5-trimethylpyrazine, 2-(3-phenylpropyl)pyridine, 4-methylacetophenone, hexanoic acid, 4-hydroxybenzoic acid, benzothiazole, and 1,5-dimethylnaphthalene.

"Group B-2" is an active ingredient group conforming to the present invention, demonstrating a remarkable effect of repelling honeybees (80% or higher repellency rate) similar to "group B-1."

<Group C-1>

Tetradecane (a), furfuryl alcohol (b), cinnamyl alcohol, cinnamaldehyde, 3-methyl-2-butenal, methyl cinnamate, geranyl formate, allyl cyclohexanepropionate, isoquinoline, borneol, carvacrol, $\delta$-dodecalactone, $\beta$-ionone, quinoline, butylamine, citronella oil, sotolon (c), ethyl 10-undecenoate, allyl phenylacetate, isoamyl butyrate, 5-ethyl-2-methylpyridine, 3,4-dimethoxybenzoic acid, 2,3-diphenylquinoquixaline, 5-hydroxyquinoxaline, and 1-methylnaphthalene.

This "group C-1" is an active-ingredient group conforming to the present invention, demonstrating an excellent effect of repelling honeybees (70% or higher repellency rate) while not repelling injurious insects to be exterminated, such as stink bugs, other than honeybees.

<Group C-2>

Furfural (c), anisaldehyde, perillaldehyde, hydroxycitronellal, n-octanal, citronellyl acetate, ethyl octanoate, 2'-acetonaphthone, acetophenone, $\alpha$-ionone, 4-methoxystyrene, 1-dodecanol (e), 2-methyl-1-propanol (isobutanol) (e), methionol, propyl 4-hydroxybenzoate, benzyl acetate, isobutyl phenylacetate, terpinyl acetate, 2,3,5-trimethylpyrazine, 2-(3-phenylpropyl)pyridine, 4-methylacetophenone, hexanoic acid, 4-hydroxybenzoic acid, benzothiazole, 1,5-dimethylnaphthalene, $\alpha$-amylcinnamaldehyde, menthyl acetate, geranyl tiglate, methyl N-methylanthranilate, ethyl pentadecanoate, 2-ethyl-3-methylpyrazine, 6-methylquinoline, 5-methylquinoxaline, 5,6,7,8-tetrahydroquinoxaline, and 2-naphthalenethiol.

"Group C-2" is an active-ingredient group conforming to the present invention, demonstrating an excellent effect of repelling honeybees (70% or higher repellency rate) similar to "group C-1."

<Group D-1>

Tetradecane (a), furfuryl alcohol (b), cinnamyl alcohol, cinnamaldehyde, 3-methyl-2-butenal, methyl cinnamate, geranyl formate, allyl cyclohexanepropionate, isoquinoline, borneol, carvacrol, $\delta$-dodecalactone, $\beta$-ionone, quinoline, butylamine, citronella oil, sotolon (c), ethyl 10-undecenoate, allyl phenylacetate, isoamyl butyrate, 5-ethyl-2-methylpyridine, 3,4-dimethoxybenzoic acid, 2,3-diphenylquinoquixaline, 5-hydroxyquinoxaline, 1-methylnaphthalene, 2-acetylfuran (b), 1-pentanol (e), vanillin, isovaleraldehyde, cinnamyl acetate, geranyl acetate, ethyl isovalerate, and $\delta$-undecanolactone.

This "group D-1" is an active ingredient group conforming to the present invention, demonstrating an excellent effect of repelling honeybees (60% or higher repellency rate) while not repelling injurious insects to be exterminated, such as stink bugs, other than honeybees.

<Group D-2>

Furfural (b), anisaldehyde, perillaldehyde, hydroxycitronellal, n-octanal, citronellyl acetate, ethyl octanoate, 2'-acetonaphthone, acetophenone, α-ionone, 4-methoxystyrene, 1-dodecanol (e), 2-methyl-1-propanol (isobutanol) (e), methionol, propyl 4-hydroxybenzoate, benzyl acetate, isobutyl phenylacetate, terpinyl acetate, 2,3,5-trimethylpyrazine, 2-(3-phenylpropyl)pyridine, 4-methylacetophenone, hexanoic acid, 4-hydroxybenzoic acid, benzothiazole, 1,5-dimethylnaphthalene, α-amylcinnamaldehyde, menthyl acetate, geranyl tiglate, methyl N-methylanthranilate, ethyl pentadecanoate, 2-ethyl-3-methylpyran, 6-methylquinoline, 5-methylquinoxaline, 5,6,7,8-tetrahydroquinoxaline, 2-naphthalenethiol, 1-benzylpyrrole (d), 3-methyl-1-butanol (e), isoeugenol, anise alcohol, ethyl vanillin, propionaldehyde, trans-2-methyl-2-butenal, butyl butylate, 2-acetylthiazole, pyrrolidine, and (S)-2-(methoxymethyl)pyrrolidine.
"Group D-2" is an active-ingredient group conforming to the present invention, demonstrating an excellent effect of repelling honeybees (60% or higher repellency rate) similar to "group D-1."

<Group E-1>

Tetradecane (a), furfuryl alcohol (b), cinnamyl alcohol, cinnamaldehyde, 3-methyl-2-butenal, methyl cinnamate, geranyl formate, allyl cyclohexanepropionate, isoquinoline, borneol, carvacrol, δ-dodecalactone, β-ionone, quinoline, butylamine, citronella oil, sotolon (c), ethyl 10-undecenoate, allyl phenylacetate, isoamyl butyrate, 5-ethyl-2-methylpyridine, 3,4-dimethoxybenzoic acid, 2,3-diphenylquinoquixaline, 5-hydroxyquinoxaline, 1-methylnaphthalene, 2-acetylfuran (b), 1-pentanol (e), vanillin, isovaleraldehyde, cinnamyl acetate, geranyl acetate, ethyl isovalerate, δ-undecanolactone, octane (a), trans-2-pentenal, valeraldehyde, ethyl 4-hydroxybenzoate, phenethyl acetate, methyl anthranilate, ethyl laurate, pyrazine, 2,6-dimethylpyridine, γ-undecalactone, and maltol propionate.
This "group E-1" is an active-ingredient group conforming to the present invention, demonstrating an excellent effect of repelling honeybees (50% or higher repellency rate) while not repelling injurious insects to be exterminated, such as stink bugs, other than honeybees.

<Group E-2>

Furfural (b), anisaldehyde, perillaldehyde, hydroxycitronellal, n-octanal, citronellyl acetate, ethyl octanoate, 2'-acetonaphthone, acetophenone, α-ionone, 4-methoxystyrene, 1-dodecanol (e), 2-methyl-1-propanol (isobutanol) (e), methionol, propyl 4-hydroxybenzoate, benzyl acetate, isobutyl phenylacetate, terpinyl acetate, 2,3,5-trimethylpyrazine, 2-(3-phenylpropyl)pyridine, 4-methylacetophenone, hexanoic acid, 4-hydroxybenzoic acid, benzothiazole, 1,5-dimethylnaphthalene, α-amylcinnamaldehyde, menthyl acetate, geranyl tiglate, methyl N-methylanthranilate, ethyl pentadecanoate, 2-ethyl-3-methylpyran, 6-methylquinoline, 5-methylquinoxaline, 5,6,7,8-tetrahydroquinoxaline, 2-naphthalenethiol, 1-benzylpyrrole (d), 3-methyl-1-butanol (e), isoeugenol, anise alcohol, ethyl vanillin, propionaldehyde, trans-2-methyl-2-butenal, butyl butylate, 2-acetylthiazole, pyrrolidine, (S)-2-(methoxymethyl)pyrrolidine, nonadecane (a), 5-methyl-2-furaldehyde (b), 1-octanol (e), butyraldehyde, ethyl phenylacetate, (-)-menthyl succinate, butyl n-octanoate, ethyl decanoate, 2,3-diethylpyrazine, 2-methylpyrazine, 3-ethylpyridine, and 4-quinoline carboxylic acid.
"Group E-2" is an active-ingredient group conforming to the present invention, demonstrating an excellent effect of repelling honeybees (50% or higher repellency rate) similar to "group E-1."

<Group F-1>

Tetradecane (a), furfuryl alcohol (b), cinnamyl alcohol, cinnamaldehyde, 3-methyl-2-butenal, methyl cinnamate, geranyl formate, allyl cyclohexanepropionate, isoquinoline, borneol, carvacrol, δ-dodecalactone, β-ionone, quinoline, butylamine, citronella oil, sotolon (c), ethyl 10-undecenoate, allyl phenylacetate, isoamyl butyrate, 5-ethyl-2-methylpyridine, 3,4-dimethoxybenzoic acid, 2,3-diphenylquinoquixaline, 5-hydroxyquinoxaline, 1-methylnaphthalene, 2-acetylfuran (b), 1-pentanol (e), vanillin, isovaleraldehyde, cinnamyl acetate, geranyl acetate, ethyl isovalerate, δ-undecanolactone, octane (a), trans-2-pentenal, valeraldehyde, ethyl 4-hydroxybenzoate, phenethyl acetate, methyl anthranilate, ethyl laurate, pyrazine, 2,6-dimethylpyridine, γ-undecalactone, maltol propionate, furaneol, (3-amino-3-carboxypropyl)dimethylsulfonium chloride, allyl hexanoate, butyl laurate, butyric acid, α-angelicalactone, and 3-methyl-2-buten-1-ol.
This "group F-1" is an active-ingredient group conforming to the present invention, demonstrating an effect of repelling honeybees (30% or higher repellency rate) while not repelling injurious insects to be exterminated, such as stink bugs, other than honeybees.

<Group F-2>

Furfural (b), anisaldehyde, perillaldehyde, hydroxycitronellal, n-octanal, citronellyl acetate, ethyl octanoate, 2'-acetonaphthone, acetophenone, α-ionone, 4-methoxystyrene, 1-dodecanol (e), 2-methyl-1-propanol (isobutanol) (e), methionol, propyl 4-hydroxybenzoate, benzyl acetate, isobutyl phenylacetate, terpinyl acetate, 2,3,5-trimethylpyrazine, 2-(3-phenylpropyl)pyridine, 4-methylacetophenone, hexanoic acid, 4-hydroxybenzoic acid, benzothiazole, 1,5-dimethylnaphthalene, α-amylcinnamaldehyde, menthyl acetate, geranyl tiglate, methyl N-methylanthranilate, ethyl pentadecanoate, 2-ethyl-3-methylpyran, 6-methylquinoline, 5-methylquinoxaline, 5,6,7,8-tetrahydroquinoxaline, 2-naphthalenethiol, 1-benzylpyrrole (d), 3-methyl-1-butanol (e), isoeugenol, anise alcohol, ethyl vanillin, propionaldehyde, trans-2-methyl-2-butenal, butyl butylate, 2-acetylthiazole, pyrrolidine, (S)-2-(methoxymethyl)pyrrolidine, nonadecane (a), 5-methyl-2-furaldehyde (b), 1-octanol (e), butyraldehyde, ethyl phenylacetate, (-)-menthyl succinate, butyl n-octanoate, ethyl decanoate, 2,3-diethylpyrazine, 2-methylpyrazine, 3-ethylpyridine, 4-quinoline carboxylic acid, butyl acetate, 2-acetylpyrrole, 2,6-dimethylpyrazine, and stearic acid.

"Group F-2" is an active-ingredient group conforming to the present invention, demonstrating an effect of repelling honeybees (30% or higher repellency rate) similar to "group F-1."

<Group G-1>

Tetradecane (a), furfuryl alcohol (b), cinnamyl alcohol, cinnamaldehyde, 3-methyl-2-butenal, methyl cinnamate, geranyl formate, allyl cyclohexanepropionate, isoquinoline, borneol, carvacrol, δ-dodecalactone, β-ionone, quinoline, butylamine, citronella oil, sotolon (c), ethyl 10-undecenoate, allyl phenylacetate, isoamyl butyrate, 5-ethyl-2-methylpyridine, 3,4-dimethoxybenzoic acid, 2,3-diphenylquinoquixaline, 5-hydroxyquinoxaline, 1-methylnaphthalene, 2-acetylfuran (b), 1-pentanol (e), vanillin, isovaleraldehyde, cinnamyl acetate, geranyl acetate, ethyl isovalerate, δ-undecanolactone, octane (a), trans-2-pentenal, valeraldehyde, ethyl 4-hydroxybenzoate, phenethyl acetate, methyl anthranilate, ethyl laurate, pyrazine, 2,6-dimethylpyridine, γ-undecalactone, maltol propionate, furaneol, (3-amino-3-carboxypropyl)dimethylsulfonium chloride, allyl hexanoate, butyl laurate, butyric acid, α-angelicalactone, 3-methyl-2-buten-1-ol, ethyl tert-butylacetate, ethyl maltol, 1-furfurylpyrrole, 2-ethylhexyl salicylate, 3,5-dimethoxybenzoic acid, ethyl cinnamate, ethyl heptanoate, 3-methyl-2-butanol, and isoamyl formate.

This "group G-1" is an active-ingredient group conforming to the present invention, demonstrating an effect of repelling honeybees (10% or higher repellency rate) while not repelling injurious insects to be exterminated, such as stink bugs, other than honeybees.

<Group G-2>

Furfural (b), anisaldehyde, perillaldehyde, hydroxycitronellal, n-octanal, citronellyl acetate, ethyl octanoate, 2'-acetonaphthone, acetophenone, α-ionone, 4-methoxystyrene, 1-dodecanol (e), 2-methyl-1-propanol (isobutanol) (e), methionol, propyl 4-hydroxybenzoate, benzyl acetate, isobutyl phenylacetate, terpinyl acetate, 2,3,5-trimethylpyrazine, 2-(3-phenylpropyl)pyridine, 4-methylacetophenone, hexanoic acid, 4-hydroxybenzoic acid, benzothiazole, 1,5-dimethylnaphthalene, α-amylcinnamaldehyde, menthyl acetate, geranyl tiglate, methyl N-methylanthranilate, ethyl pentadecanoate, 2-ethyl-3-methylpyran, 6-methylquinoline, 5-methylquinoxaline, 5,6,7,8-tetrahydroquinoxaline, 2-naphthalenethiol, 1-benzylpyrrole (d), 3-methyl-1-butanol (e), isoeugenol, anise alcohol, ethyl vanillin, propionaldehyde, trans-2-methyl-2-butenal, butyl butylate, 2-acetylthiazole, pyrrolidine, (S)-2-(methoxymethyl)pyrrolidine, nonadecane (a), 5-methyl-2-furaldehyde (b), 1-octanol (e), butyraldehyde, ethyl phenylacetate, (-)-menthyl succinate, butyl n-octanoate, ethyl decanoate, 2,3-diethylpyrazine, 2-methylpyrazine, 3-ethylpyridine, 4-quinoline carboxylic acid, butyl acetate, 2-acetylpyrrole, 2,6-dimethylpyrazine, stearic acid, heptadecane, γ-butyrolactone, benzyl propionate, 1-methylpyrrolidine, isoamyl isovalerate, isoamyl acetate, acetyl acetone, diacetone alcohol, butyl sulfide, and 1-octadecanol.

"Group G-2" is an active-ingredient group conforming to the present invention, demonstrating an effect of repelling honeybees (10% or higher repellency rate) similar to "group G-1."

How the aforementioned active ingredient of the present invention is classified based on chemical structure is described below. It should be noted that the following classifications reference Chapter 29 Organic Chemicals in the Explanatory Notes to the Customs Tariff Schedule (Zai-Kan No. 1443 dated November 28, 2016, last modified as Zai-Kan No. 163 dated February 5, 2020) by the Customs and Tariff Bureau of the Ministry of Finance. If the compound belongs to two or more classes among (I) to (XIX), it shall be deemed to belong to the last class in the numerical array of those deemed applicable among (I) to (XIX). It should also be noted that, unless otherwise stated below, the classification based on the aforementioned Explanatory Notes to the Customs Tariff Schedule shall be followed.

Regarding the active ingredient of the honeybee repellent proposed by the present invention, it is considered that the difference between its palatability (smell, taste, etc.) to honeybees and to stink bugs and other injurious insects to be exterminated, as well as the different surface areas of honeybees and of stink bugs and other injurious insects to be exterminated, cause them to display different reactions, etc., upon coming in contact with the active ingredient, and that honeybees recoil and avoid the active ingredient specifically.

(I) Noncyclic Hydrocarbon Compounds

Noncyclic hydrocarbon compounds are compounds consisting only of carbon and hydrogen that do not have any ring structure. The "(I) noncyclic hydrocarbon compounds" include the aforementioned (a) straight-chain alkanes with 6 to 19 carbon atoms, among which straight-chain alkanes with 8 to 14 carbon atoms are preferred components, as they demonstrate an excellent honeybee repelling effect while not repelling stink bugs and other injurious insects to be exterminated. It is considered that straight-chain alkanes with 8 to 14 carbon atoms have particularly high permeability to the epidermis of injurious insects, which allows for easy manifestation of different responses by honeybees and by stink bugs and other injurious insects to be exterminated when the alkanes touch their body surface, where honeybees recoil and avoid them specifically.

The (a) straight-chain alkanes with 6 to 19 carbon atoms include octane (a-1), tetradecane (a-2), heptadecane (a-3), nonadecane (a-4), etc. Among these, octane and tetradecane, which are straight-chain alkanes of 8 to 14 carbon atoms, are preferred components as they demonstrate an excellent honeybee repelling effect while not repelling stink bugs and other injurious insects to be exterminated.

(II) Cyclic Hydrocarbon Compounds

Cyclic hydrocarbon compounds are compounds having one or more ring structures in the molecule and consisting only of carbon and hydrogen. Meanwhile, aromatic hydrocarbon compounds are cyclic hydrocarbon compounds having one or more condensed benzene rings or non-condensed benzene rings in the molecule. The "(II) cyclic hydrocarbon compounds" include (ii) aromatic hydrocarbon compounds, and the "(ii) aromatic hydrocarbon compounds" include (ii-1) hydrocarbon compounds having two or more benzene rings. Particularly among the "(ii-1) hydrocarbon compounds" having two or more benzene rings, compounds having only one substitution group are preferred components as they demonstrate an excellent honeybee repelling effect while not repelling stink bugs and other injurious insects to be exterminated.

The (ii-1) include 1-methylnaphthalene, 1,5-dimethylnaphthalene, etc. Among these, 1-methylnaphthalene is a preferred component as it demonstrates an excellent honeybee repelling effect while not repelling stink bugs and other injurious insects to be exterminated.

(III) Noncyclic Alcohol Compounds

Noncyclic alcohol compounds are compounds in which one or more hydrogen atoms of a noncyclic hydrocarbon have been substituted by a hydroxyl group. The "(III) noncyclic alcohol compounds" include the aforementioned (e) aliphatic alcohols, and the (e) aliphatic alcohols include (iii-1) saturated monovalent alcohols and (iii-2) unsaturated monovalent alcohols.

The "(iii-1) saturated monovalent alcohols" include 1-octanol (e-1), 1-dodecanol (e-2), 1-octadecanol (e-3), 3-methyl-2-butanol (e-4), 2-methyl-1-propanol (isobutanol) (e-5), 3-methyl-1-butanol (e-6), 1-pentanol (e-7), etc., while the (iii-2) unsaturated monovalent alcohols include 3-methyl-2-buten-1-ol (e-8), 1-penten-3-ol (e-9), etc. Among these, 3-methyl-2-butanol, 1-pentanol, 3-methyl-2-buten-1-ol, and 1-penten-3-ol are preferred components as they demonstrate a honeybee repelling effect while not repelling stink bugs and other injurious insects to be exterminated, and furthermore 1-pentanol is a more preferred component as it demonstrates an excellent honeybee repelling effect.

(IV) Cyclic Alcohol Compounds

Cyclic alcohol compounds are compounds having one or more ring structures in the molecule, where one or more hydrogen atoms have been substituted by a hydroxyl group. The "(IV) cyclic alcohol compounds" include (iv-1) cyclic terpene alcohols and (iv-2) aromatic alcohols.

The "(iv-1) cyclic terpene alcohols" include borneol, etc., while the "(iv-2) aromatic alcohols" include cinnamyl alcohol, etc. Among these, borneol and cinnamyl alcohol are preferred components as they demonstrate a remarkable honeybee repelling effect while not repelling stink bugs and other injurious insects to be exterminated. These preferred components are also components known to be biosynthesized by plants. It is considered that, in particular, their palatability (smell, taste, etc.) to honeybees which is different from that to stink bugs and other injurious insects to be exterminated, has impact on honeybees that recoil and avoid these components specifically.

(V) Phenol Compounds

Phenol compounds are compounds having a structure in which one or more hydrogen atoms of a benzene ring have been substituted by a hydroxyl group. Also, mononuclear monophenol compounds are phenol compounds having a structure in which one hydrogen atom of a benzene ring has been substituted by a hydroxyl group, where the molecule has only one benzene ring. The "(V) phenol compounds" include the (v-1) mononuclear monophenol compounds, which in turn include carvacrol, etc. Among these, carvacrol is a preferred component as it demonstrates a remarkable honeybee repelling effect while not repelling stink bugs and other injurious insects to be exterminated. Carvacrol is also a compound known to be biosynthesized by plants. It is considered that, in particular, its palatability (smell, taste, etc.) to honeybees which is different from that to stink bugs and other injurious insects to be exterminated, has impact on honeybees that recoil and avoid carvacrol specifically.

(VI) Ether Compounds (Regardless of Having or Not Having Other Oxygen Functional Group)

Ether compounds are compounds in which the hydrogen atoms of alcohol or phenol hydroxyl groups have been substituted by hydrocarbon groups (alkyl group and allyl group). Meanwhile, ether compounds having other oxygen functional groups are ether compounds having, in the same molecule, one or more of the oxygen functional groups (alcohols, phenols) described in (III) to (V). The "(VI) ether compounds" include (vi-1) compounds having a methoxybenzene skeleton (anisole skeleton), which in turn include isoeugenol, anise alcohol, 4-methoxystyrene, etc. Among these, the (vi-1) compounds having a methoxybenzene skeleton (anisole skeleton) are preferred components as they demonstrate an excellent honeybee repelling effect.

(VIII) Aldehyde Compounds (Regardless of Having or Not Having Other Oxygen Functional Group)

Aldehyde compounds are compounds having an aldehyde group resulting from oxidation of a primary alcohol. Meanwhile, aldehyde compounds having other oxygen functional group are aldehyde compounds having, in the same molecule, one or more of the oxygen functional groups (alcohols, ethers, phenols) described in (III) to (VI). To be specific, compounds having an aldehyde group and an alcoholic hydroxyl group are called "aldehyde alcohols," ether compounds having an aldehyde group are called "aldehyde ethers," and compounds having an aldehyde group and a phenolic hydroxyl group are called "aldehyde phenols." The "(VII) aldehyde compounds" include (vii-1) saturated noncyclic aldehydes, (vii-2) unsaturated noncyclic aldehydes, (vii-3) unsaturated alicyclic aldehydes, (vii-4) aromatic aldehydes, (vii-5) aldehyde ethers, (vii-6) aldehyde ethers and aldehyde phenols, and (vii-7) aldehyde alcohols.
The "(vii-1) saturated noncyclic aldehydes" include propionaldehyde, n-octanal, isovaleraldehyde, valeraldehyde, butylaldehyde, etc., "(vii-2) unsaturated noncyclic aldehydes" include trans-2-pentenal, 3-methyl-2-butenal, trans-2-methyl-2-butenal, etc., "(vii-3) unsaturated alicyclic aldehydes" include perillaldehyde, etc., "(vii-4) aromatic aldehydes" include cinnamaldehyde, $\alpha$-amylcinnamaldehyde, etc., "(vii-5) aldehyde ethers" include anisaldehyde, etc., "(vii-6) aldehyde ethers and aldehyde phenols" include vanillin, ethyl vanillin, etc., and "(vii-7) aldehyde alcohols" include hydroxycitronellal, etc. Among these, isovaleraldehyde, valeraldehyde, trans-2-pentenal, 3-methyl-2-butenal, cinnamaldehyde, and vanillin are preferred components as they demonstrate an excellent honeybee repelling effect while not repelling stink bugs and other injurious insects to be exterminated, and furthermore 3-methyl-2-butenal and cinnamaldehyde are more preferred components among the foregoing as they demonstrate a remarkable honeybee repelling effect.

(VIII) Ketone Compounds (Regardless of Having or Not Having Other Oxygen Functional Group)

Ketone compounds are compounds having a carbonyl group in the molecule. Ketone compounds having other oxygen functional group are ketone compounds having, in the same molecule, one or more of the oxygen functional groups (alcohols, ethers, phenols, aldehydes) described in (III) to (VII). To be specific, ketone compounds having a carbonyl group and an alcoholic hydroxyl group are called "ketone alcohols." The "(VIII) ketone compounds" include (viii-1) noncyclic ketones, (viii-2) unsaturated alicyclic ketones, (viii-3) aromatic ketones, and (viii-4) ketone alcohols.
The "(viii-1) noncyclic ketones" include acetylacetone, etc., "(viii-2) unsaturated alicyclic ketones" include $\beta$-ionone, $\alpha$-ionone, etc., "(viii-3) aromatic ketones" include 2'-acetonaphtone, 4-methylacetophenone, acetophenone, etc., and "(viii-4) ketone alcohols" include diacetone alcohol, etc. Among these, $\beta$-ionone is a preferred component as it demonstrates a remarkable honeybee repelling effect while not repelling stink bugs and other injurious insects to be exterminated.

(IX) Saturated Noncyclic Monocarboxylic Acid Compounds

Carboxylic acid compounds are compounds having a carboxyl group in the molecule, and are classified as saturated/unsaturated based on whether or not there are double bonds, etc., in the non-carboxyl-group part of the molecule, and also as noncyclic/cyclic based on whether or not there is a ring structure. The "(IX) saturated noncyclic monocarboxylic acid compounds" include (ix-1) saturated noncyclic monocarboxylic acid compounds with 4 or more carbon atoms, which in turn include hexanoic acid, butyric acid, stearic acid, etc. Among these, butyric acid is a preferred component as it demonstrates a honeybee repelling effect while not repelling stink bugs and other injurious insects to be exterminated.

(X) Saturated Noncyclic Monocarboxylic Acid Ester Compounds

Saturated noncyclic monocarboxylic acid ester compounds are ester compounds in which the carboxyl group hydrogen atoms of a saturated noncyclic monocarboxylic acid compound have been substituted by an alkyl group or allyl group. Meanwhile, "an ester compound of a saturated noncyclic carboxylic acid with 1 to 15 carbon atoms" means that the number of carbon atoms of the saturated noncyclic carboxylic acid compound prior to alkyl group or allyl group substitution of carboxyl group hydrogen is 1 to 15. The (X) saturated noncyclic monocarboxylic acid ester compounds include (x) ester compounds of saturated noncyclic carboxylic acids with 1 to 15 carbon atoms, which in turn include cinnamyl acetate, benzyl acetate, phenethyl acetate, benzyl propionate, menthyl acetate, geranyl acetate, geranyl formate, terpinyl acetate, citronellyl acetate, butyl butyrate, butyl n-octanoate, butyl laurate, butyl decanoate, ethyl pentadecanoate, ethyl laurate, ethyl isovalerate, ethyl tert-butylacetate, isoamyl propionate, butyl acetate, ethyl butyrate, ethyl octanoate, allyl hexanoate, isoamyl butyrate, isoamyl isovalerate, isoamyl acetate, isoamyl formate, ethyl heptanoate, etc. Among these, cinnamyl acetate, phenethyl acetate, geranyl acetate, geranyl formate, butyl laurate, ethyl laurate, ethyl isovalerate, ethyl tert-butylacetate, isoamyl propionate, allyl hexanoate, isoamyl butyrate, isoamyl formate, and ethyl heptanoate are preferred components as they demonstrate a honeybee repelling effect while not repelling stink bugs and other injurious insects to be exterminated, and furthermore cinnamyl acetate, phenethyl acetate, geranyl acetate, geranyl formate, ethyl laurate, ethyl isovalerate, and isoamyl butyrate are more preferred components as they demonstrate an even better honeybee repelling effect.

(XI) Unsaturated Noncyclic Monocarboxylic Acid Compounds and Cyclic Monocarboxylic Acid Compounds

The "(XI) unsaturated noncyclic monocarboxylic acid compounds and cyclic monocarboxylic acid compounds" include (xi-1) unsaturated noncyclic monocarboxylic acid compounds as well as salts, esters, and other derivatives thereof, (xi-2) saturated alicyclic monocarboxylic acid compounds as well as salts, esters, and other derivatives thereof, (xi-3) aromatic saturated monocarboxylic acid compounds as well as salts, esters, and other derivatives thereof, and (xi-4) aromatic unsaturated monocarboxylic acid compounds as well as salts, esters, and other derivatives thereof. Among these, the (xi-2) saturated alicyclic monocarboxylic acid compounds as well as salts, esters, and other derivatives thereof and (xi-4) aromatic unsaturated monocarboxylic acid compounds as well as salts, esters, and other derivatives thereof are preferred components as they demonstrate a honeybee repelling effect while not repelling stink bugs and other injurious insects to be exterminated, and furthermore cinnamic acid as well as salts, esters, and other derivatives thereof are more preferred components among the foregoing. Additionally, these preferred components are components known to be biosynthesized by plants. It is considered that, in particular, their palatability (smell, taste, etc.) to honeybees which is different from that to stink bugs and other injurious insects to be exterminated, has impact on honeybees that recoil and avoid these components specifically.

The "(xi-1) unsaturated noncyclic monocarboxylic acid compounds as well as salts, esters, and other derivatives thereof' include geranyl tiglate, ethyl 10-undecenoate, etc., (xi-2) saturated alicyclic monocarboxylic acid compounds as well as salts, esters, and other derivatives thereof include allyl cyclohexanepropionate, etc., (xi-3) aromatic saturated monocarboxylic acid compounds as well as salts, esters, and other derivatives thereof include isobutyl phenylacetate, ethyl phenylacetate, allyl phenylacetate, etc., and (xi-4) aromatic unsaturated monocarboxylic acid compounds as well as salts, esters, and other derivatives thereof include methyl cinnamate, ethyl cinnamate, etc. Among these, ethyl 10-undecenoate, allyl cyclohexanepropionate, allyl phenylacetate, methyl cinnamate, and ethyl cinnamate are preferred components as they demonstrate a honeybee repelling effect while not repelling stink bugs and other injurious insects to be exterminated, and furthermore ethyl 10-undecenoate, allyl cyclohexanepropionate, allyl phenylacetate, and methyl cinnamate are more preferred components among the foregoing as they demonstrate an excellent honeybee repelling effect.

(XII) Polycarboxylic Acid Compounds

Polycarboxylic acid compounds are carboxylic acid compounds having two or more carboxyl groups. The "(XII) polycarboxylic acid" include (xii-1) noncyclic polycarboxylic acid compounds as well as esters, salts, and other derivatives thereof, which in turn include (-)-menthyl succinate, etc.

(XIII) Carboxylic Acid Compounds (Limited to Those Having Other Oxygen Functional Group)

Carboxylic acid compounds having other oxygen functional group are carboxylic acid compounds having, in the same molecule, one or more of the oxygen functional groups (alcohols, ethers, phenols, aldehydes, ketones) described in (III) to (VIII). The "(XIII) carboxylic acid compounds (limited to those having other oxygen functional group)" include (xiii-1) alcohol-function carboxylic acid compounds as well as esters, salts, and other derivatives thereof (where the alcohol function is not an ester), (xiii-2) phenol-function carboxylic acid compounds as well as esters, salts, and other derivatives thereof, (xiii-3) aldehyde-function or ketone-function carboxylic acid compounds as well as esters, salts, and other derivatives thereof, and (xiii-4) carboxylic acid compounds having two methoxy groups as well as esters, salts, and other derivatives thereof, and furthermore the (xiii-3) aldehyde-function or ketone-function carboxylic acid compounds as well as esters, salts, and other derivatives thereof, and (xiii-4) carboxylic acid compounds having two methoxy groups as well as esters, salts, and other derivatives thereof are preferred components as they demonstrate a honeybee repelling effect while not repelling stink bugs and other injurious insects to be exterminated. Also, among these, acetoacetic acid ester, dimethoxybenzoic acid, as well as esters, salts, and other derivatives thereof are preferred components.

The "(xiii-1) alcohol-function carboxylic acid compounds as well as esters, salts, and other derivatives thereof (where the alcohol function is not an ester)" include triethyl citrate, etc.; (xiii-2) phenol-function carboxylic acid compounds as well as esters, salts, and other derivatives thereof include propyl 4-hydroxybenzoate, ethyl 4-hydroxybenzoate, 2-ethylhexyl salicylate, 4-hydroxybenzoic acid, etc.; (xiii-3) aldehyde-function or ketone-function carboxylic acid compounds as well as esters, salts, and other derivatives thereof include ethyl acetoacetate being an acetoacetic acid ester; and (xiii-4) carboxylic acid compounds having two methoxy groups as well as esters, salts, and other derivatives thereof include 3,4-dimethoxybenzoic acid, 3,5-dimethoxybenzoic acid, etc. Among these, triethyl citrate, ethyl 4-hydroxybenzoate, 2-ethylhexyl salicylate, ethyl acetoacetate, 3,4-dimethoxybenzoic acid, and 3,5-dimethoxybenzoic acid are preferred components as they demonstrate a honeybee repelling effect while not repelling stink bugs and other injurious insects to be exterminated, and furthermore ethyl 4-hydroxybenzoate and 3,4-dimethoxybenzoic acid are more preferred components among the foregoing as they demonstrate an excellent honeybee repelling effect.

(XIV) Amine-function Compounds

Amine-function compounds are organic nitrogen compounds having an amine structure (obtained by substituting one, two or three ammonia hydrogen atoms with one, two or three alkyl groups or allyl groups, respectively). The "(XIV) amine-function compounds" include (xiv-1) noncyclic monoamine compounds as well as derivatives thereof and salts thereof, which in turn include aliphatic amines such as butylamine, etc. Among these, butylamine being an aliphatic amine is a preferred component as it demonstrates an excellent honeybee repelling effect while not repelling stink bugs and other injurious insects to be exterminated.

(XV) Oxygen-function Amino Compounds

Oxygen-function amino compounds are compounds having one or more amino groups, while also having, in the same molecule, one or more of the oxygen functional groups (alcohols, ethers, phenols, aldehydes, ketones) described in (I) to (VIII). Meanwhile, amino acids are compounds having one or more carboxyl groups and one or more amino groups. The "(XV) oxygen-function amino compounds" include (xv-1) amino acids as well as esters thereof and salts thereof, which in turn include, for example, methyl anthranilate and methyl N-methylanthranilate, each being an anthranilic acid ester. Among these, methyl anthranilate being an anthranilic acid ester is a preferred component as it demonstrates an excellent honeybee repelling effect while not repelling stink bugs and other injurious insects to be exterminated.

(XVI) Organic Sulfur Compounds

Organic sulfur compounds are compounds having, in the molecule, a sulfur atom directly bonded to a carbon atom. They also include compounds in which other nonmetal or metal atoms, besides the sulfur atom, is directly bonded to a carbon atom. The "(XVI) organic sulfur compounds" include methionol, 2-naphthalenethiol, butyl sulfide, (3-amino-3-carboxypropyl)dimethylsulfonium chloride, etc. Among these, (3-amino-3-carboxypropyl)dimethylsulfonium chloride is a preferred component as it demonstrates a honeybee repelling effect while not repelling stink bugs and other injurious insects to be exterminated.

(XVII) Heterocyclic Compounds (Limited to Those Having Only Oxygen as Heteroatoms)

Heterocyclic compounds are compounds having one or more rings in the molecule, while having, in the ring, carbon atoms and other atoms of oxygen, nitrogen, sulfur, etc. Heterocyclic compounds having only oxygen as heteroatoms have, in the molecular ring, only oxygen as non-carbon atoms. Meanwhile, lactones are heterocyclic compounds having one or more esters in the molecular ring, comprising two or more carbon atoms and having only oxygen as heteroatoms. 4-pyrones are heterocyclic compounds having a 4-pyrone skeleton. The "(XVII) heterocyclic compounds" include (xvii-1) lactones (other than furanone compounds), (xvii-2) 4-pyrones besides the aforementioned (b) furan compounds, and (c) furanone compounds with unsaturated bonds. Among these, the (xvii-1) lactones (other than furanone compounds) of carbon number 5 or greater, (c) furanone compounds with unsaturated bonds, and (xvii-2) 4-pyrones are preferred components as they demonstrate a honeybee repelling effect while not repelling stink bugs and other injurious insects to be exterminated. These preferred components include components derived from fermentation facilitated by microorganisms. It is considered that, in particular, the specific unpalatability of these components (smell, taste, etc.) to honeybees, has impact on honeybees that recoil and avoid these components specifically.

The "(b) furan components" include 2-acetylfuran, 5-methyl-2-furaldehyde, furfural, furfuryl alcohol, etc.; (c) furanone compounds with unsaturated bonds include furaneol, sotolon, α-angelicalactone, etc.; (xvii-1) lactones (other than furanone compounds) include γ-undecalactone, γ-butyrolactone, δ-dodecalactone, δ-undecanolactone, etc.; and (xvii-2) 4-pyrones include ethyl maltol, maltol propionate, etc. Among these, 2-acetylfuran, furfuryl alcohol, furaneol, sotolon, α-angelicalactone, γ-undecalactone, δ-dodecalactone, δ-undecanolactone, ethyl maltol, and maltol propionate are preferred components as they demonstrate a honeybee repelling effect while not repelling stink bugs and other injurious insects to be exterminated, and furthermore 2-acetylfuran, furfuryl alcohol, sotolon, γ-undecalactone, δ-dodecalactone, δ-undecanolactone, and maltol propionate are more preferred components among the foregoing as they demonstrate an excellent honeybee repelling effect.

(XVIII) Heterocyclic Compounds (Limited to Those Having Only Nitrogen as Heteroatoms)

Heterocyclic compounds having only nitrogen as heteroatoms have, in the molecular ring, only nitrogen as non-carbon atoms. Meanwhile, "pyrazine compounds" refers to those having a pyrazine ring, while "pyridine compounds" refers to those having a pyridine ring. Also, "quinoline and isoquinoline derivatives" refers to heterocyclic compounds having a structure of condensed benzene and pyridine rings. "Quinoxaline compounds" refers to heterocyclic compounds having a structure of condensed benzene and pyrazine rings, and those whose benzene ring assumes a saturated hydrogen bond structure are also included. "Pyrrolidine compounds" refers to those having a pyrrolidine ring. The "(XVIII) heterocyclic compounds (limited to those having only nitrogen as heteroatoms)" include (xviii-1) pyrazine compounds, (xviii-2) pyridine compounds, (xviii-3) quinoline and isoquinoline derivatives, (xviii-4) quinoxaline compounds, and (xviii-5) pyrrolidine compounds besides the aforementioned (d) pyrrole compounds of carbon number 6 or greater.

The "(d) pyrrole compounds of carbon number 6 or greater" include 1-benzylpyrrole, 2-acetylpyrrole, 1-furfurylpyrrole, etc.; "(xviii-1) pyrazine compounds" include 2-ethyl-3-methylpyrazine, 2,6-dimethylpyrazine, 2,3,5,6-tetramethylpyrazine, 2,3,5-trimethylpyrazine, 2,3-diethylpyrazine, pyrazine, 2-methylpyrazine, etc.; "(xviii-2) pyridine compounds" include 5-ethyl-2-methylpyridine, 2-(3-phenylpropyl)pyridine, 2,6-dimethylpyridine, 3-ethylpyridine, etc., "(xviii-3) quinoline; and isoquinoline derivatives" include isoquinoline, 6-methylquinoline, quinoline, and 4-quinolinecarboxylic acid; "(xviii-4) xaline compounds" include 5-methylquinoxaline, 2,3-diphenylquinoxaline, 5-hydroxyquinoxaline, 5,6,7,8-tetrahydroquinoxaline, etc.; and (xviii-5) pyrrolidine compounds include pyrrolidine, 1-methylpyrrolidine, (S)-2-(methoxymethyl)pyrrolidine, etc. Among these, 1-furfurylpyrrole, pyrazine, 5-ethyl-2-methylpyridine, 2,6-dimethylpyridine, isoquinoline, quinoline, 2,3-diphenylquinoxaline, and 5-hydroxyquinoxaline are preferred components as they demonstrate a honeybee repelling effect while not repelling stink bugs and other injurious insects to be exterminated, and furthermore pyrazine, 5-ethyl-2-methylpyridine, 2,6-dimethylpyridine, isoquinoline, quinoline, 2,3-diphenylquinoxaline, and 5-hydroxyquinoxaline are more preferred components among the foregoing as they demonstrate an excellent honeybee repelling effect.

(XIX) Heterocyclic Compounds (Limited to Those Having Only Nitrogen and Sulfur as Heteroatoms)

Heterocyclic compounds having only nitrogen and sulfur as heteroatoms have, in the molecular ring, only nitrogen and sulfur besides carbon. The "(XIX) heterocyclic compounds" include (xix-1) those having a thiazole ring or benzothioazole ring, which in turn include 2-acetylthiazole, benzothiazole, etc.

(XX) Essential Oils

The "(XX) essential oils" include citronella oil, etc.

<Formulations>

The forms of the honeybee repellent proposed by the present invention include one in which the active ingredient is formulated into a product together with, as necessary, components that are generally added to formulations, and one in which the formulated product is diluted with water. Among others, formulated products, namely solid and liquid formulations, are preferred as they are compact and excellent in storage stability, thus offering advantages during transport and storage. Particularly, in the sense that preferably the honeybee repellent proposed by the present invention is used in liquid form, liquid formulations are preferred because, when water dilution is called for, they can be easily diluted and leave little undissolved solids.

As for the content of the active ingredient of the honeybee repellent proposed by the present invention, it is contained by preferably 0.00001% by weight per volume or more, or more preferably 0.001% by weight per volume or more, or yet more preferably 0.01% by weight per volume or more, or most preferably 0.1% by weight per volume or more, relative to the total amount of the preparation at use. If the content of the active ingredient is lower than 0.00001% by weight per volume, the repelling effect may not be demonstrated fully. If this content exceeds 99.5% by weight per volume, on the other hand, problems will arise in terms of the formulation process and stability of the formulated product, and therefore preferably the content is 99.5% by weight per volume or lower.

<Surfactants>

Surfactants may be blended in during the formulation of the honeybee repellent proposed by the present invention. As for surfactants, any of nonionic surfactants, anionic surfactants, cationic surfactants, and amphoteric surfactants may be used without limitation; among these, however, nonionic surfactants and anionic surfactants are preferred.

To be specific, nonionic surfactants include, for example, those based on sugar esters, fatty acid esters, plant oils, alcohols, alkylphenols, polyoxyethylene-polyoxypropylene block polymers, alkylamines, bisphenols, and polycyclic aromatics. Anionic surfactants include those based on carboxylic acids, sulfonic acids, sulfuric acid esters, and phosphoric acid esters. Cationic surfactants include those based on ammonium and benzalkonium. Amphoteric surfactants include those based on betaine.

Any one of these surfactants may be used alone, or two or more types may be combined.

<Liquid Carriers>

Liquid carriers may be blended in during the formulation of the honeybee repellent proposed by the present invention. Liquid carriers are not limited in any way so long as they achieve the effects of the present invention, and various known liquids different from the active ingredient of the present invention may be used as carriers.

For dilution, purified water, tap water, ion-exchanged water, distilled water, filtered water, sterilized water, ground water, well water, etc., may be used, for example. During the formulation of the honeybee repellent proposed by the present invention, auxiliary components generally added to formulations may be blended in, as necessary, besides the aforementioned surfactants and liquid carriers. Examples of auxiliary components generally added to formulations include stabilizers, preservatives, coloring agents, agents to prevent accidental ingestion/eating, etc. Examples of stabilizers include dibutylhydroxytoluene (BHT), butylhydroxyanisole (BHA) and other antioxidants, ascorbic acid, etc. Examples of preservatives include sorbic acid, sorbic acid salt, para-hydroxybenzoic acid esters, thiabendazole, sodium chloride, etc. Coloring agents include caramel pigment, gardenia pigment, anthocyanin pigment, safflower pigment, flavonoid pigment, Red 2, Red 3, Yellow 4, Yellow 5, etc. Agents to prevent accidental ingestion/eating include denatonium benzoate, etc.

<Poison Baits>

The honeybee repellent proposed by the present invention may be blended into a poison bait for exterminating carnivorous bees such as hornets and paper wasps. Such blending application allows honeybees, the extermination of which is not intended, to be repelled.

Poison baits for carnivorous bees such as hornets and paper wasps, into which the honeybee repellent proposed by the present invention is blended, may take the forms of, for example, liquid formulations, powder formulations, ball-shaped formulations, paste formulations, gel formulations, tablet formulations, etc., while coating formulations include, for example, brush-able formulations, sprayable formulations, injectable formulations, etc. Also, a bait base impregnated, deposited, or coated with such poison bait may be installed at an intended location for extermination of carnivorous bees, so that it will be eaten by, and thus achieve the effect of exterminating, carnivorous bees. The material for the bait base may be sponge, cotton pads, nonwoven fabric based on natural fibers or synthetic fibers, water-absorbent polymer or other polymers, woven fabric, paper, porous bodies, etc.

Preferably such poison bait is used while stored in a container, where the storage container is not limited in shape, size, etc., so long as the poison bait into which the honeybee repellent proposed by the present invention is blended can be housed inside, and it can take any form suitable for the location of use and method of use. The material for such container is not limited in any way, and may be, for example, glass, metal, plastic, or any other material such as special paper that provides waterproof or water-repellent function to keep the honeybee repellent proposed by the present invention from leaking out of the container. If the poison bait into which the honeybee repellent proposed by the present invention is blended is to be installed outdoors, an embodiment is preferred in which a cover is provided that maintains some space with respect to the opening while preventing entry of rainwater, etc., so as to prevent rainwater, etc., from entering and thus diluting the poison bait, thereby reducing the effect of repelling honeybees or the effect of exterminating carnivorous bees. Preferably the poison bait containing the honeybee repellent proposed by the present invention is used by hanging it at a point 1 to 3 meters from the ground, or placing it in a flat area where the entry ways to the container are not blocked, away from the direct sun as much as possible.

<Bee Traps>

The honeybee repellent proposed by the present invention may be blended into an attractant that attracts carnivorous bees such as hornets and paper wasps, which is then stored in a container for use as a bee trap. Such blending application allows honeybees, the extermination of which is not intended, to be repelled.

Such bee trap is not limited in shape, size, etc., so long as the attractant for carnivorous bees such as hornets and paper wasps into which the honeybee repellent proposed by the present invention is blended can be housed inside, and it can take any form suitable for the location of use and method of use. The material for such container is not limited in any way, and may be, for example, glass, metal, plastic, or any other material such as special paper that provides waterproof or water-repellent function to keep the honeybee repellent proposed by the present invention from leaking out of the container.

As an embodiment of the container, ideally a lid is provided that covers the opening of the container, where an opening is formed on the lid or container through which bees enter the container. This opening only needs to have the size and shape that allow bees to enter the container with ease and, while the number of openings varies depending on the size of the container, preferably two or more but no more than five openings are formed.

The container may be provided with a transparent or opaque window-equivalent part or the container itself may be made transparent or opaque, to allow for visual recognition of the number of bees trapped or make the trapped bees less visible and thus minimize any uncomfortable feeling. Also, preferably the opening is shaped like a funnel, etc., to prevent the bees that have entered the container from easily escaping from the container.

If the bee trap is to be installed outdoors, an embodiment is preferred in which a cover is provided that maintains some space with respect to the opening while preventing entry of rainwater, etc., so as to prevent rainwater, etc., from entering and thus diluting the attractant for carnivorous bees such as hornets and paper wasps into which the honeybee repellent proposed by the present invention is blended, thereby reducing the effect of repelling honeybees or the effect of attracting carnivorous bees.

Preferably the bee trap that uses the attractant for carnivorous bees such as hornets and paper wasps into which the honeybee repellent proposed by the present invention is blended, is used by hanging it at a point 1 to 3 meters from the ground, fixing in on a fence, etc., or placing it in a flat area where the entry ways to the container are not blocked, away from the direct sun as much as possible.

<Pesticides>

The honeybee repellent proposed by the present invention may be blended into insecticides/miticides and fungicides applied on agricultural crops or into herbicides applied to agricultural lands and nonagricultural lands. Such blending application keeps honeybees from entering the pesticide spraying areas and thus prevents damage by extermination of honeybees by contacting the pesticides indirectly. Also, the honeybee repellent proposed by the present invention may be used on its own, where use of the honeybee repellent proposed by the present invention before or after spraying of insecticides/miticides and fungicides applied on agricultural crops or herbicides applied to agricultural lands and nonagricultural lands prevents damage by extermination of honeybees by contacting the pesticides directly or indirectly.

Pesticides that can be combined with the honeybee repellent proposed by the present invention are not limited in any way, and examples include known compounds, such as: insecticides/miticides including acetamiprid, imidaproclide, clothianidin, dinotefuran, thiacloprid, thiamethoxam, nitenpyram and other neonicotinoid-based pesticides, allethrin, resmethrin, d-phenothrin, tetramethrin, cypermethrin, deltamethrin, fenvalerate, permethrin, etofenprox and other pyrethroid-based pesticides, ethiprole, fipronil and other phenylpyrazole-based pesticides, and dichlorvos, trichlorfon, cyanophos, fenitrothion, chlorpyrifos, diazinon, malathion, acephate, isoxathion, phoxim and other organic phosphorus-based pesticides; fungicides including penthiopyrad and other pyrazole-based pesticides; and herbicides including butamifos and other organic phosphorus-based pesticides. In particular, acetamiprid, imidaproclide, clothianidin, dinotefuran, thiacloprid, thiamethoxam, nitenpyram and other neonicotinoid-based pesticides, as well as ethiprole, fipronil and other phenylpyrazole-based pesticides, are known to have significant impact on honeybees, thus allowing the intended effects to be achieved notably and with ease when combined with the honeybee repellent proposed by the present invention.

**Examples**

The present invention is explained in greater detail below using recipe examples, test examples, etc.; however, the present invention is not limited to these examples.

It should be noted that, unless otherwise specified, numerical values indicate % by weight per volume.

<Test for Confirmation of Honeybee Repelling Effect 1>

The following test was conducted to confirm that the honeybee repellent proposed by the present invention demonstrates a repelling effect against honeybees.

(1) Preparation of Test Samples

The following were used as the test samples for Examples: 2% by weight per volume ethanol solutions of octane (a-1), tetradecane (a-2), heptadecane (a-3), nonadecane (a-4), 2-acetylfuran (b-1), 5-methyl-2-furaldehyde (b-2), furfural (b-3), furaneol (c-1), 2-acetylpyrrole (d-1), 1-benzylpyrrole (d-2), 1-octanol (e-1), 1-dodecanol (e-2), and 1-octadecanol (e-3), respectively; and 2% by weight per volume aqueous solutions of furfuryl alcohol (b-4), sotolon (c-2), and $\alpha$-angelicalactone (c-3), respectively.

The following were used as the test samples for Comparative Examples: 2% by weight per volume ethanol solutions of eicosane (carbon number 20, p-1), heneicosane (carbon number 21, p-2), 2-methyloctane (branched alkane, p-3), tributyl o-acetylcitrate (p-4), and 1-methylpyrrole (p-5), respectively; and 2% by weight per volume aqueous solutions of 2-methyltetrahydrofuran-3-one (p-6) and acetic acid (p-7), respectively.

Ethanol alone and water alone were used as samples for correction. It should be noted that, with the samples for correction using ethanol and water alone, no repelling effect against honeybees was observed.

(2) Preparation of Feeding Stations

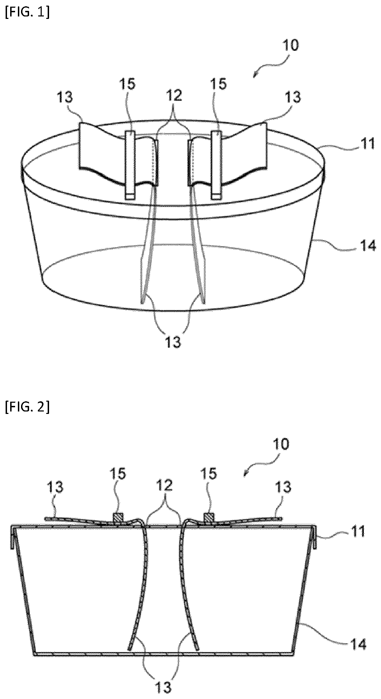

As shown in FIG. 1, two cuts 12 were made in a lid of KP cup 11 (150 mm in diameter), through which cotton pads 13 (80 mm × 170 mm) were inserted and placed so that they would each cover the lid surface with around one half (80 mm × 85 mm) of it, after which the lid was fitted on a KP cup 14 (150 mm in diameter × 60 mm in height). The cotton pads 13 were impregnated with 40% sugar water (80 g), after which disposable wooden chopsticks 15 (80 mm in length) were placed over the cotton pads on the lid surface as "landing areas," for use as "test insect (honeybee) feeding station 1" 10.

"Test insect (honeybee) feeding station 1," whose cotton pads 13 exposed on the lid surface were uniformly sprayed with one of the test samples (16 samples) for Examples, test samples (7 samples) for Comparative Examples, and samples for correction (2 samples) by 5 mL (active ingredient in the Examples and Comparative Examples: 0.1 g), was used as "test insect (honeybee) feeding station 2."

(3) Test Method

A nest box of test insects (honeybees) (1 colony: approx. 6,000 bees) was placed at the center of a glass hothouse (bottom face: 5 m × 10 m, height (highest part): 3 m, temperature: 25°C), and the aforementioned "test insect (honeybee) feeding station 1" was installed at a location 2 meters away from the nest box.

After confirming that at least five test insects (honeybees) were feeding at the above "test insect (honeybee) feeding station 1" installed in the hothouse, test 1 was conducted to measure the "approaching count (Mz)" and "landing count (My)" and calculate the "landing rate (Mx)."

Next, the "test insect (honeybee) feeding station 1" installed in the hothouse was replaced with each "test insect (honeybee) feeding station 2" which was let to stand still for 5 minutes, after which test 2 was conducted to measure the "approaching count (Nz)" and "landing count (Ny)" and calculate the "landing rate (Nx)."

Here, the meanings of "approaching count," "landing count" and "landing rate" are as follows:

Approaching count: Total number of times a honeybee has approached within 25 cm of the cotton wools at the feeding station during 5 minutes

Landing count: Total number of honeybees that have remained for at least 1 second on the cotton pads at the feeding station during 5 minutes

$$\text{Landing rate (\%): (Landing count/Approaching count) x 100}$$

$$(Mx) = (My)/(Mz) \times 100$$

$$(Nx) = (Ny)/(Nz) \times 100$$

(4) Evaluation Method

The "repelling rate Q" and "corrected repelling rate R" were calculated from the above "landing rates" using the calculation formula below. For the "repelling rate of sample for correction" used to calculate the "corrected repelling rate R," the repelling rate of each of the samples for correction above (ethanol alone or water alone being a solvent for the active ingredient) was used.

$$\text{Repelling rate Q (\%)} = \{(Mx)-(Nx)\}/(Mx) \times 100$$

$$\text{Corrected repelling rate R (\%)} = \{\text{Repelling rate of test sample - Repelling rate of sample for correction}\}/\{100 - \text{Repelling rate of sample for correction}\} \times 100$$

The corrected repelling rates R (%) relating to the test samples for Examples and test samples for Comparative Examples are summarized in Table 1 below.

[Table 1]

|  | Active ingredient |  | Corrected repelling rate R (%) |
|---|---|---|---|
| Examples | (a) | a-1 | 57.0 |
|  |  | a-2 | 96.5 |
|  |  | a-3 | 28.2 |
|  |  | a-4 | 56.7 |
|  | (b) | b-1 | 60.3 |
|  |  | b-2 | 55.3 |
|  |  | b-3 | 93.6 |
|  |  | b-4 | 94.8 |
|  | (c) | c-1 | 44.0 |
|  |  | c-2 | 79.7 |
|  |  | c-3 | 31.7 |
|  | (d) | d-1 | 37.0 |
|  |  | d-2 | 68.3 |
|  | (e) | e-1 | 58.3 |
|  |  | e-2 | 84.6 |
|  |  | e-3 | 16.2 |

(continued)

|  | Active ingredient | Corrected repelling rate R (%) |
|---|---|---|
| Comparative Examples | p-1 | <0 |
|  | p-2 | <0 |
|  | p-3 | <0 |
|  | p-4 | <0 |
|  | p-5 | <0 |
|  | p-6 | <0 |
|  | p-7 | <0 |

As shown in Table 1, the Examples containing the active ingredients conforming to the present invention clearly presented an excellent honeybee repelling property. Despite the fact that this test method represents testing under severe conditions whereby the honeybees are taught about "feeding station 1" containing 40% sugar water, which is then switched with "feeding station 2" containing each test sample placed at the same location, and test 2 is conducted 5 minutes thereafter, the honeybee repellents conforming to the present invention clearly had an excellent repelling effect.

By contrast, repelled behaviors of honeybees were not observed at all with the Comparative Examples containing components different from the active ingredients conforming to the present invention.

In particular, while a-1, a-2, and a-3 representing specific examples of (a) under the present invention exhibited an excellent repelling effect, repelled behaviors of honeybees were not observed at all with p-1, p-2, and p-3 representing examples of either an alkane whose number of carbon atoms differs from (a) under the present invention or an alkane that has the same number of carbon atoms but is branched. Also, while c-1, c-2, and c-3 representing specific examples of (c) under the present invention exhibited an excellent repelling effect, repelled behaviors of honeybees were not observed at all with p-6 having no unsaturated bonds unlike (c) under the present invention. Similarly, while d-1 and d-2 representing specific examples of (d) under the present invention exhibited an excellent repelling effect, repelled behaviors of honeybees were not observed at all with p-5 whose 1-substitution group and number of carbon atoms differ from d-2.

Furthermore, visual observation also confirmed that, with one or more types of components selected from (a) to (e) under the present invention, around one half of the honeybees that landed on the cotton pads exhibited no eating behaviors or their eating period was short.

These results clearly indicate that one or more types of components selected from (a) to (e) under the present invention exhibit a repelling effect against honeybees.

<Test for Confirmation of Stink Bug Behaviors against Active Ingredients of Present Invention 1>

By assuming that the honeybee repellent proposed by the present invention would be combined with pesticides, the following test was conducted using stink bugs to confirm the type of behaviors injurious insects to be exterminated by pesticides would exhibit against the honeybee repellent proposed by the present invention.

Ethanol alone and water alone were used as samples for correction. It should be noted that, with the samples for correction using ethanol and water alone, no repelling effect against stink bugs was observed.

(1) Test Samples

The test samples in "Test for Confirmation of Honeybee Repelling Effect 1" above were used.

(2) Test Method

A liquid calcium carbonate/ethanol dispersion was applied on the entire interior wall of a KP cup (100 mm in diameter × 90 mm in height) and air-dried, after which a filter paper (90 mm in diameter) was fixed on the bottom face of the KP cup using double-sided tape. A different filter paper (90 mm in diameter) was cut along its diameter and the resulting semicircle-shaped paper was uniformly treated with 400 μL of each test sample or sample for correction, and then placed over the filter paper fixed on the aforementioned bottom face of the KP cup by allowing the circular parts to overlap, for use as a testing device.

Two test insects (southern green stink bugs) were released into the above test device and their behaviors were observed for 30 minutes (1,800 seconds), to measure the average time A (sec) the two bugs remained on the filter paper treated with the test sample or sample for correction, as well as the average time B (sec) the two bugs remained on the filter paper not treated with the test sample or sample for correction.

(3) Evaluation Method

The "repelling rate Y" and "corrected repelling rate Z" were calculated from the above "time A (sec)" and "time B (sec)" using the calculation formula below. For the "repelling rate of sample for correction" used to calculate the "corrected repelling rate Z," the repelling rate of each of the samples for correction above (ethanol alone or water alone being a solvent for the active ingredient) was used.

$$\text{Repelling rate Y (\%)} = \{(\text{Time B (sec)}) - (\text{Time A (sec)})\}/1800 \times 100$$

$$\text{Corrected repelling rate Z (\%)} = \{\text{Repelling rate of test sample} - \text{Repelling rate of sample for correction}\}/\{100 - \text{Repelling rate of sample for correction}\} \times 100$$

The corrected stink bug repelling rates Z (%) relating to the test samples, and their corrected honeybee repelling rates R (%) above as reference, are summarized in Table 2 below.

[Table 2]

| Active ingredient | | Corrected repelling rate (%) | |
|---|---|---|---|
| | | Stink bugs | Honeybees |
| (a) | a-1 | <0 | 57.0 |
| | a-2 | <0 | 96.5 |
| (b) | b-1 | <0 | 60.3 |
| | b-4 | <0 | 94.8 |
| (c) | c-1 | <0 | 44.0 |
| | c-2 | <0 | 79.7 |
| | c-3 | <0 | 31.7 |

As shown in Table 2, it was confirmed that stink bugs would not exhibit any repelled behaviors at all against the active ingredients conforming to the present invention.

These results confirm that the honeybee repellent proposed by the present invention can, when combined with a chemical agent for exterminating stink bugs, provide a selective pesticide that repels honeybees without repelling stink bugs, while also revealing that the present invention can constitute stink bug trap agents and stink bug bait agents.

In other words, the honeybee repellent proposed by the present invention can, when combined with a pesticide, keep honeybees from approaching the applied areas and therefore prevent honeybees from coming in direct or indirect contact with the pesticide and thereby being exterminated.

Also, the honeybee repellent proposed by the present invention can, when blended into a trap agent or bait agent, prevent honeybees from being attracted to such controlling agent and thereby exterminated, without repelling injurious insects to be exterminated.

It should be noted that, according to the separately conducted test, carnivorous bees such as hornets and paper wasps did not recoil or avoid the active ingredients conforming to the present invention.

<Test for Confirmation of Honeybee Repelling Effect 2>

The following test was conducted to confirm that the honeybee repellent proposed by the present invention, other than what is represented in "Test for Confirmation of Honeybee Repelling Effect 1," demonstrates a repelling effect against honeybees.

**EP 4 154 712 A1**

(1) Preparation of Test Samples

The following were used as the test samples for Examples: 0.1% by weight per volume ethanol solutions of 3-methyl-2-butanol (e-4), carvacrol (x-1), isoeugenol (x-2), cinnamyl alcohol (x-3), diacetone alcohol (x-4), α-amylcinnamaldehyde (x-5), 3-methyl-2-butenal (x-6), valeraldehyde (x-7), ethyl cinnamate (x-8), methyl cinnamate (x-9), ethyl isovalerate (x-10), isoamyl formate (x-11), 5-ethyl-2-methylpyridine (x-12), 2-(3-phenylpropyl)pyridine (x-13), 2,6-dimethylpyridine (x-14), ß-ionone (x-15), 2-acetylthiazole (x-16), butylamine (x-17), and citronella oil (x-18), respectively; and a 0.1% by weight per volume aqueous solution of (3-amino-3-carboxypropyl)dimethylsulfonium chloride (x-19).

Ethanol alone and water alone were used as samples for correction. It should be noted that, with the samples for correction using ethanol and water alone, no repelling effect against honeybees was observed.

In the same manner as in "Test for Confirmation of Honeybee Repelling Effect 1" above, feeding stations were prepared using the test samples (20 samples) for Examples, and the corrected repelling rate R (%) was calculated based on the same test method (using 5 mL of each test sample, volume of active ingredient: 5 mg) and evaluation method for "Test for Confirmation of Honeybee Repelling Effect 1." The corrected repelling rates R (%) relating to the test samples for Examples are summarized in Table 3 below.

[Table 3]

|          | Active ingredient | | Corrected repelling rate R (%) |
|----------|-----|------|------|
|          | (e) | e-4  | 17.7 |
| Examples | (x) | x-1  | 80.6 |
|          |     | x-2  | 64.6 |
|          |     | x-3  | 98.2 |
|          |     | x-4  | 20.9 |
|          |     | x-5  | 77.8 |
|          |     | x-6  | 91.8 |
|          |     | x-7  | 50.7 |
|          |     | x-8  | 21.8 |
|          |     | x-9  | 93.3 |
|          |     | x-10 | 61.0 |
|          |     | x-11 | 15.1 |
|          |     | x-12 | 72.4 |
|          |     | x-13 | 86.4 |
|          |     | x-14 | 50.0 |
|          |     | x-15 | 83.7 |
|          |     | x-16 | 61.7 |
|          |     | x-17 | 83.4 |
|          |     | x-18 | 87.0 |
|          |     | x-19 | 40.9 |

As shown in Table 3, the Examples containing the active ingredients conforming to the present invention clearly presented an excellent honeybee repelling property.

It was confirmed that, while the concentration of active ingredient was 2% by weight per volume of solution for the test samples in "Test for Confirmation of Honeybee Repelling Effect 1" above, the test samples in "Test for Confirmation of Honeybee Repelling Effect 2" herein had an excellent repelling effect despite their extremely low concentration of active ingredient at 0.1% by weight per volume of solution.

19

<Test for Confirmation of Stink Bug Behaviors against Active Ingredients of Present Invention 2>

By assuming that the honeybee repellent proposed by the present invention would be combined with pesticides, this stink bug behavior confirmation test was conducted based on the same test method (using 400 μL of each test sample) and evaluation method for "Test for Confirmation of Stink Bug Behaviors against Active Ingredients of Present Invention 1" above.

For the test samples, the test samples in "Test for Confirmation of Honeybee Repelling Effect 2" above were used.

Ethanol alone and water alone were used as samples for correction. It should be noted that, with the samples for correction using ethanol and water alone, no repelling effect against stink bugs was observed.

The corrected stink bug repelling rates Z (%) relating to the test samples, and their corrected honeybee repelling rates R (%) above as reference, are summarized in Table 4 below.

[Table 4]

| Active ingredient | | Corrected repelling rate (%) | |
|---|---|---|---|
| | | Stink bugs | Honeybees |
| (e) | e-4 | <0 | 17.7 |
| (x) | x-1 | <0 | 80.6 |
| | x-3 | <0 | 98.2 |
| | x-6 | <0 | 91.8 |
| | x-7 | <0 | 50.7 |
| | x-8 | <0 | 21.8 |
| | x-9 | <0 | 93.3 |
| | x-10 | <0 | 61.0 |
| | x-11 | <0 | 15.1 |
| | x-12 | <0 | 72.4 |
| | x-13 | <0 | 86.4 |
| | x-14 | <0 | 50.0 |
| | x-15 | <0 | 83.7 |
| | x-17 | <0 | 83.4 |
| | x-18 | <0 | 87.0 |
| | x-19 | <0 | 40.9 |

As shown in Table 4, it was confirmed that stink bugs would not exhibit any repelled behaviors at all against the active ingredients conforming to the present invention.

These results confirm that the honeybee repellent proposed by the present invention can, when combined with a pesticide for exterminating stink bugs, etc., demonstrate a selective effect of keeping honeybees from approaching the applied areas without repelling stink bugs, etc., to be exterminated, therefore preventing honeybees from coming in direct or indirect contact with the pesticide and thereby being exterminated.

<Test for Confirmation of Honeybee Repelling Effect 3, Test for Confirmation of Stink Bug Behaviors 3>

The following test samples were used to conduct a test to confirm that the honeybee repellent proposed by the present invention, other than what is represented in "Tests for Confirmation of Honeybee Repelling Effect 1, 2," demonstrates a repelling effect against honeybees.

Furthermore, the same test samples were used to conduct a test for confirmation of stink bug behaviors by assuming a combined use of the honeybee repellent proposed by the present invention and a pesticide.

(1) Preparation of Test Samples

The following were used as the test samples for Examples: 0.1% by weight per volume ethanol solutions of 1-furfurylpyrrole (d-3), 2-methyl-1-propanol (isobutanol) (e-5), 3-methyl-1-butanol (e-6), 1-pentanol (e-7), 3-methyl-2-buten-1-ol (e-8), borneol (y-1), anise alcohol (y-2), anisaldehyde (y-4), cinnamaldehyde (y-5), ethyl vanillin (y-6), vanillin (y-7), perillaldehyde (y-8), trans-2-pentenal (y-10), propionaldehyde (y-11), n-octanal (y-12), trans-2-methyl-2-butenal (y-13), isovaleraldehyde (y-14), butylaldehyde (y-15), propyl 4-hydroxybenzoate (y-16), ethyl 4-hydroxybenzoate (y-17), cinnamyl acetate (y-18), benzyl acetate (y-19), phenethyl acetate (y-20), isobutyl phenylacetate (y-21), 2-ethylhexyl salicylate (y-22), benzyl propionate (y-23), menthyl acetate (y-26), geranyl acetate (y-27), geranyl formate (y-28), terpinyl acetate (y-29), citronellyl acetate (y-30), geranyl tiglate (y-31), (-)-menthyl succinate (y-32), methyl anthranilate (y-33), methyl N-methylanthranilate (y-34), butyl butyrate (y-35), butyl n-octanoate (y-36), butyl laurate (y-37), ethyl decanoate (y-38), ethyl 10-undecenoate (y-39), ethyl pentadecanoate (y-40), ethyl laurate (y-41), ethyl tert-butylacetate (y-42), allyl cyclohexanepropionate (y-43), allyl phenylacetate (y-44), butyl acetate (y-46), allyl hexanoate (y-49), ethyl heptanoate (y-54), 2,3,5-trimethylpyrazine (y-55), 2,3-diethylpyrazine (y-56), pyrazine (y-57), 2-methylpyrazine (y-58), 2-ethyl-3-methylpyrazine (y-59), 2,6-dimethylpyrazine (y-60), $\gamma$-undecalactone (y-63), $\gamma$-butyrolactone (y-64), $\delta$-dodecalactone (y-65), $\delta$-undecanolactone (y-66), 2'-acetonaphtone (y-67), 4-methylacetophenone (y-68), acetylacetone (y-70), $\alpha$-ionone (y-71), stearic acid (y-74), 3,4-dimethoxybenzoic acid (y-75), 3,5-dimethoxybenzoic acid (y-76), 4-hydroxybenzoic acid (y-77), benzothiazole (y-78), isoquinoline (y-79), 6-methylquinoline (y-80), quinoline (y-81), 4-quinolinecarboxylic acid (y-82), 5-methylquinoxaline (y-83), 2,3-diphenylquinoxaline (y-84), 5-hydroxyquinoxaline (y-85), 1-methylnaphthalene (y-87), 2-naphthalenethiol (y-88), 1,5-dimethylnaphthalene (y-89), pyrrolidine (y-91), 1-methylpyrrolidine (y-92), (S)-2-(methoxymethyl)pyrrolidine (y-93), ethyl maltol (y-95), and maltol propionate (y-96), respectively; 0.1% by weight per volume aqueous solutions of hexanoic acid (y-72) and butyric acid (y-73), respectively; and 2.0% by weight per volume ethanol solutions of methionol (y-3), hydroxycitronellal (y-9), ethyl phenylacetate (y-24), ethyl octanoate (y-48), isoamyl butyrate (y-51), isoamyl isovalerate (y-52), isoamyl acetate (y-53), 3-ethylpyridine (y-62), acetophenone (y-69), 5,6,7,8-tetrahydroquinoxaline (y-86), 4-methoxystyrene (y-90), and butyl sulfide (y-94), respectively.

A 2.0% by weight per volume aqueous solution of propionic acid (p-8) was used as the test sample for Comparative Example.

Ethanol alone and water alone were used as samples for correction. It should be noted that, with the samples for correction using ethanol and water alone, no repelling effect against honeybees or repelling effect against stink bugs was observed.

In the same manner as in "Test for Confirmation of Honeybee Repelling Effect 1" above, feeding stations were prepared using the test samples (96 samples) for Examples and test sample (1 sample) for Comparative Example, and the corrected repelling rate R (%) was calculated based on the same test method (using 5 mL of each test sample) and evaluation method for "Test for Confirmation of Honeybee Repelling Effect 1."

Also, a test was conducted using the test samples (96 samples) for Examples and test sample (1 sample) for Comparative Example based on the same test method (using 400 $\mu$L of each test sample) and evaluation method for "Test for Confirmation of Stink Bug Behaviors against Active Ingredients of Present Invention 1 " above.

The corrected honeybee repelling rates R (%) relating to the test samples for Examples and Comparative Example are summarized in Table 5 below.

Also, the corrected stink bug repelling rates Z (%) are summarized in Table 5 below using "O" for rates "<0" and "×" for rates "not <0."

[Table 5]

| | Active ingredient | Corrected repelling rate (%) | | Active ingredient | Corrected repelling rate (%) | | Active ingredient | Corrected repelling rate (%) | |
|---|---|---|---|---|---|---|---|---|---|
| | | Honeybees | Stink bugs | | Honeybees | Stink bugs | | Honeybees | Stink bugs |
| Examples | d-3 | 25.4 | ○ | y-29 | 81.2 | × | y-65 | 86.6 | ○ |
| | e-5 | 88.2 | × | y-30 | 91.1 | × | y-66 | 69.3 | ○ |
| | e-6 | 65.4 | × | y-31 | 70.3 | × | y-67 | 91.0 | × |
| | e-7 | 68.9 | ○ | y-32 | 57.7 | × | y-68 | 84.3 | × |
| | e-8 | 30.4 | ○ | y-33 | 51.0 | ○ | y-69 | 98.9 | × |
| | y-1 | 80.0 | ○ | y-34 | 78.6 | × | y-70 | 21.5 | × |
| | y-2 | 66.6 | × | y-35 | 61.7 | × | y-71 | 90.0 | × |
| | y-3 | 84.7 | × | y-36 | 52.0 | × | y-72 | 89.4 | × |
| | y-4 | 91.5 | × | y-37 | 33.0 | ○ | y-73 | 33.0 | ○ |
| | y-5 | 94.4 | ○ | y-38 | 58.7 | × | y-74 | 33.7 | × |
| | y-6 | 60.3 | × | y-39 | 75.8 | ○ | y-75 | 70.6 | ○ |
| | y-7 | 61.2 | ○ | y-40 | 77.6 | × | y-76 | 22.1 | ○ |
| | y-8 | 94.7 | × | y-41 | 59.6 | ○ | y-77 | 80.1 | × |
| | y-9 | 92.8 | × | y-42 | 27.7 | ○ | y-78 | 87.7 | × |
| | y-10 | 55.4 | ○ | y-43 | 90.4 | ○ | y-79 | 92.3 | ○ |
| | y-11 | 64.0 | × | y-44 | 73.6 | ○ | y-80 | 74.7 | × |
| | y-12 | 96.3 | × | y-46 | 40.2 | × | y-81 | 80.2 | ○ |
| | y-13 | 67.4 | × | y-48 | 94.1 | × | y-82 | 55.5 | × |
| | y-14 | 65.5 | ○ | y-49 | 33.5 | ○ | y-83 | 78.7 | × |
| | y-15 | 51.0 | × | y-51 | 75.9 | ○ | y-84 | 75.8 | ○ |
| | y-16 | 89.7 | × | y-52 | 23.5 | × | y-85 | 71.5 | ○ |
| | y-17 | 56.6 | ○ | y-53 | 23.0 | × | y-86 | 73.2 | × |
| | y-18 | 69.0 | ○ | y-54 | 20.9 | ○ | y-87 | 74.3 | ○ |
| | y-19 | 83.2 | × | y-55 | 80.6 | × | y-88 | 74.6 | × |
| | y-20 | 58.9 | ○ | y-56 | 57.0 | × | y-89 | 88.8 | × |
| | y-21 | 80.5 | × | y-57 | 51.3 | ○ | y-90 | 95.6 | × |
| | y-22 | 23.7 | ○ | y-58 | 55.0 | × | y-91 | 61.2 | × |
| | y-23 | 26.0 | × | y-59 | 72.8 | × | y-92 | 25.9 | × |
| | y-24 | 55.5 | × | y-60 | 35.4 | × | y-93 | 66.9 | × |
| | y-26 | 76.4 | × | y-62 | 58.3 | × | y-94 | 17.2 | × |
| | y-27 | 68.0 | ○ | y-63 | 55.9 | ○ | y-95 | 27.6 | ○ |
| | y-28 | 98.0 | ○ | y-64 | 27.5 | × | y-96 | 57.5 | ○ |
| Comparative Example | p-8 | <0 | × | | | | | | |

As shown in Table 5, the Examples containing the active ingredients conforming to the present invention clearly presented an excellent honeybee repelling property.

Among the foregoing, 1-pentanol (e-7), borneol (y-1), cinnamaldehyde (y-5), vanillin (y-7), trans-2-pentenal (y-10), isovaleraldehyde (y-14), ethyl 4-hydroxybenzoate (y-17), cinnamyl acetate (y-18), phenethyl acetate (y-20), geranyl acetate (y-27), geranyl formate (y-28), methyl anthranilate (y-33), ethyl 10-undecenoate (y-39), ethyl laurate (y-41), allyl cyclohexanepropionate (y-43), allyl phenylacetate (y-44), isoamyl butyrate (y-51), pyrazine (y-57), $\gamma$-undecalactone (y-63), $\delta$-dodecalactone (y-65), $\delta$-undecanolactone (y-66), 3,4-dimethoxybenzoic acid (y-75), isoquinoline (y-79), quinoline (y-81), 2,3-diphenylquinoxaline (y-84), 5-hydroxyquinoxaline (y-85), 1-methylnaphthalene (y-87), and maltol propionate (y-96) clearly demonstrated a superior effect as an active ingredient for the present invention in that they demonstrated an excellent honeybee repelling effect suitable for practical use (50% or higher repelling rate) while not repelling stink bugs that are injurious insects to be exterminated.

These results confirm that the honeybee repellent proposed by the present invention can, when combined with a pesticide for exterminating stink bugs, etc., demonstrate a selective effect of keeping honeybees from approaching the applied areas without repelling stink bugs, etc., to be exterminated, therefore preventing honeybees from coming in direct or indirect contact with the pesticide and thereby being exterminated.

<Test for Confirmation of Effect from Combined Use with Pesticide 1>

By assuming that the honeybee repellent proposed by the present invention would be combined with pesticides, a test was conducted using the following test samples to confirm the impact any such pesticide would have on honeybees and on stink bugs to be exterminated.

(1) Preparation of Test Samples

Cinnamyl alcohol was used as the active ingredient of the honeybee repellent proposed by the present invention, while dinotefuran was used as the pesticide.

As the test sample representing a combined use of the honeybee repellent proposed by the present invention and the pesticide, a mixed ethanol solution containing cinnamyl alcohol and dinotefuran (0.1% by weight per volume of cinnamyl alcohol and 0.01% by weight per volume of dinotefuran) was used.

As the test sample representing the pesticide alone, a 0.01% by weight per volume ethanol solution of dinotefuran was used.

(2) Preparation of Feeding Stations and Water Stations

2 cotton pads (80 mm × 170 mm) were layered on a lid of KP cup (150 mm in diameter) and the cotton pads were impregnated with 40% sugar water (80 g), after which two disposable wooden chopsticks (80 mm in length) were placed as "landing areas," for use as "test insect (honeybee, stink bug) feeding station A."

Also, equivalents of feeding station A above, except that water (80 g) was impregnated instead of 40% sugar water (80 g), were used as "water stations."

"Test insect (honeybee, stink bug) feeding station A," whose cotton pads were sprayed uniformly with 5 mL (containing 0.5 mg of dinotefuran) of the 0.01% by weight per volume ethanol solution of dinotefuran, was used as "test insect (honeybee, stink bug) feeding station B."

"Test insect (honeybee, stink bug) feeding station A," whose cotton pads were sprayed uniformly with 5 mL (containing 5 mg of cinnamyl alcohol and 0.5 mg of dinotefuran) of the mixed ethanol solution (0.1% by weight per volume of cinnamyl alcohol, 0.01% by weight per volume of dinotefuran), was used as "test insect (honeybee, stink bug) feeding station C."

(3) Test Method

3 spaces (80 cm × 80 cm × 80 cm, 25°C) covered with nylon gauze were designated as "untreated zone" in which a water station and feeding station A were installed, "test zone 1" in which a water station and feeding stations A, B were installed, and "test zone 2" in which a water station and feeding stations A, C were installed.

In each of these "untreated zone," "test zone 1," and "test zone 2," 50 honeybees (western honeybees) and 10 stink bugs (southern green stink bugs) were released and the number of dead honeybees and that of dead stink bugs were checked at the start of testing as well as 3 hours, 18 hours, and 20 hours after the start of testing.

The results on honeybees are shown in Table 6 below, while the results on stink bugs are shown in Table 7 below.

[Table 6]

| Time (h) | Number of dead honeybees | | |
|---|---|---|---|
| | Untreated zone | Test zone 1 (pesticide only) | Test zone 2 (pesticide + honeybee repelling component) |
| 0 | 0 | 0 | 0 |
| 3 | 2 | 1 | 2 |
| 18 | 2 | 3 | 2 |
| 20 | 3 | 21 | 3 |

[Table 7]

| Time (h) | Number of dead stink bugs | | |
|---|---|---|---|
| | Untreated zone | Test zone 1 (pesticide only) | Test zone 2 (pesticide + honeybee repelling component) |
| 0 | 0 | 0 | 0 |
| 3 | 0 | 2 | 1 |
| 18 | 0 | 5 | 6 |
| 20 | 0 | 6 | 6 |

As shown in Table 6, honeybees corresponding to approx. 40% of the tested population had died by the time 20 hours elapsed after the start of testing in test zone 1 where only dinotefuran, or the pesticide, was used; however, in test zone 2 where cinnamyl alcohol being the active ingredient of the honeybee repellent proposed by the present invention was combined with dinotefuran, or the pesticide, the number of honeybees that had died from the start of testing until 20 hours thereafter was the same as the number of dead honeybees in the untreated zone, suggesting that the former result represented natural deaths.

These results clearly show that, when combined with the pesticide, the active ingredient of the honeybee repellent proposed by the present invention demonstrates an effect of successfully stopping honeybees from dying due to the pesticide.

Meanwhile, as shown in Table 7, it was confirmed that there was no difference between the number of dead stink bugs in test zone 1 where only dinotefuran, or the pesticide, was used, and that in test zone 2 where cinnamyl alcohol being the active ingredient of the honeybee repellent proposed by the present invention was combined with dinotefuran, or the pesticide.

These results clearly show that the active ingredient of the honeybee repellent proposed by the present invention does not repel stink bugs to be exterminated, thereby allowing for extermination of stink bugs, etc., to be exterminated just as would be expected when the pesticide is used alone.

<Test for Confirmation of Effect from Combined Use with Pesticide 2>

A test was conducted using the following test samples to confirm the impact pesticides would have on honeybees and on stink bugs to be exterminated, based on combinations different from that in <Test for Confirmation of Effect from Combined Use with Pesticide 1>.

(1) Preparation of Test Samples

Carvacrol was used as the active ingredient of the honeybee repellent proposed by the present invention, while clothianidin or fipronil was used as the pesticide.

As a test sample representing a combined use of the honeybee repellent proposed by the present invention and the pesticide, a mixed ethanol solution containing carvacrol and clothianidin (0.1% by weight per volume of carvacrol and 0.01% by weight per volume of clothianidin) or mixed ethanol solution containing carvacrol and fipronil (0.1% by weight per volume of carvacrol and 0.01% by weight per volume of fipronil) was used.

As a test sample representing the pesticide alone, a 0.01% by weight per volume ethanol solution of clothianidin or 0.01% by weight per volume ethanol solution of fipronil was used.

In the same manner as in <Test for Confirmation of Effect from Combined Use with Pesticide 1> above, the number of deaths among 50 honeybees (western honeybees) and that among 10 stink bugs (southern green stink bugs) were checked in each of the "untreated zone," "test zone 1," and "test zone 2." Based on the results of <Test for Confirmation of Effect from Combined Use with Pesticide 1> above, the test was terminated when the number of dead honeybees in "test zone 1" reached around one half the tested population.

The results on honeybees when clothianidin was used as the pesticide are shown in Table 8 below, while the results on honeybees when fipronil was used as the pesticide are shown in Table 9 below.

[Table 8]

| Time (h) | Number of dead honeybees | | |
|---|---|---|---|
| | Untreated zone | Test zone 1 (pesticide only) | Test zone 2 (pesticide + honeybee repelling component) |
| 0 | 0 | 0 | 0 |
| 1 | 1 | 11 | 0 |
| 2 | 2 | 18 | 1 |
| 3 | 3 | 39 | 5 |

[Table 9]

| Time (h) | Number of dead honeybees | | |
|---|---|---|---|
| | Untreated zone | Test zone 1 (pesticide only) | Test zone 2 (pesticide + honeybee repelling component) |
| 0 | 0 | 0 | 0 |
| 2 | 0 | 14 | 0 |
| 3 | 0 | 32 | 0 |

As shown in Tables 8 and 9, combining carvacrol being the active ingredient of the honeybee repellent proposed by the present invention with clothianidin or fipronil being the pesticide, turned out to be just like combining cinnamyl alcohol and dinotefuran in <Test for Confirmation of Effect from Combined Use with Pesticide 1> above in that, while honeybees corresponding to approx. 60% of the tested population had died by the time 3 hours elapsed after the start of test in test zone 1 where only the pesticide was used, the number of dead honeybees in test zone 2 where the active ingredient of the honeybee repellent proposed by the present invention was combined with the pesticide, was roughly the same as the number of dead honeybees in the untreated zone, suggesting that the former result represented natural deaths.

These results also clearly show that, when combined with the pesticide, the active ingredient of the honeybee repellent proposed by the present invention demonstrates an effect of successfully stopping honeybees from dying due to the pesticide.

In addition, it was confirmed that, also when carvacrol being the active ingredient of the honeybee repellent proposed by the present invention was combined with clothianidin or fipronil being the pesticide, there was no difference between the number of dead stink bugs in test zone 1 where only the pesticide was used, and that in test zone 2 where the active ingredient of the honeybee repellent proposed by the present invention was combined with the pesticide, just like when cinnamyl alcohol and dinotefuran were combined in <Test for Confirmation of Effect from Combined Use with Pesticide 1> above.

These results clearly show that the active ingredient of the honeybee repellent proposed by the present invention does not repel stink bugs to be exterminated, thereby allowing for extermination of stink bugs, etc., to be exterminated just as would be expected when the pesticide is used alone.

**Industrial Field of Application**

The honeybee repellent proposed by the present invention displays a repelling effect against honeybees and therefore, when blended into a trap agent, bait agent, or other controlling agent for exterminating carnivorous bees such as hornets and paper wasps, it can prevent honeybees from being attracted to and therefore exterminated by such controlling agent, which allows an effect of exterminating carnivorous bees such as hornets and paper wasps to be achieved with ease.

Also, the honeybee repellent proposed by the present invention is useful in that, when combined with a pesticide applied on agricultural crops, it demonstrates an effect of keeping honeybees from approaching the treated agricultural crops and thus preventing damage by extermination of honeybees by contacting the pesticide directly or indirectly.

**Claims**

1. A honeybee repellent whose active ingredient comprises one or more types selected from tetradecane, furfuryl alcohol, cinnamyl alcohol, cinnamaldehyde, 3-methyl-2-butenal, methyl cinnamate, geranyl formate, allyl cyclohexanepropionate, isoquinoline, borneol, carvacrol, $\delta$-dodecalactone, $\beta$-ionone, quinoline, butylamine, and citronella oil.

2. A method for repelling honeybees that uses, as an active ingredient, one or more types selected from tetradecane, furfuryl alcohol, cinnamyl alcohol, cinnamaldehyde, 3-methyl-2-butenal, methyl cinnamate, geranyl formate, allyl cyclohexanepropionate, isoquinoline, borneol, carvacrol, $\delta$-dodecalactone, $\beta$-ionone, quinoline, butylamine, and citronella oil.

3. A honeybee repellent whose active ingredient comprises one or more types selected from (a) to (e) below:

   (a) straight-chain alkanes with 6 to 19 carbon atoms
   (b) furan compounds
   (c) furanone compounds with unsaturated bonds
   (d) pyrrole compounds with 6 or more carbon atoms (e) aliphatic alcohols.

4. A method for repelling honeybees that uses, as an active ingredient, one or more types selected from (a) to (e) below:

   (a) straight-chain alkanes with 6 to 19 carbon atoms
   (b) furan compounds
   (c) furanone compounds with unsaturated bonds
   (d) pyrrole compounds with 6 or more carbon atoms (e) aliphatic alcohols.

[FIG. 1]

[FIG. 2]

## INTERNATIONAL SEARCH REPORT

International application No.

PCT/JP2021/018733

### A. CLASSIFICATION OF SUBJECT MATTER

Int.Cl. A01N27/00(2006.01)i, A01N31/02(2006.01)i, A01N31/08(2006.01)i, A01N31/14(2006.01)i, A01N33/04(2006.01)i, A01N35/02(2006.01)i, A01N37/10(2006.01)i, A01P17/00(2006.01)i, A01N65/44(2009.01)i, A01M29/12(2011.01)i, A01N43/08(2006.01)i, A01N43/36(2006.01)i, A01N43/40(2006.01)i, A01N43/78(2006.01)i

FI: A01N27/00, A01P17/00, A01N43/08F, A01N43/08H, A01N43/36A, A01N31/02, A01N43/08C, A01M29/12, A01N31/08, A01N31/14, A01N35/02, A01N37/10, A01N43/40101A, A01N43/78B, A01N33/04, A01N65/44

According to International Patent Classification (IPC) or to both national classification and IPC

### B. FIELDS SEARCHED

Minimum documentation searched (classification system followed by classification symbols)

Int.Cl. A01N27/00, A01N31/02, A01N31/08, A01N31/14, A01N33/04, A01N35/02, A01N37/10, A01P17/00, A01N65/44, A01M29/12, A01N43/08, A01N43/36, A01N43/40, A01N43/78

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

JSTPlus/JMEDPlus/JST7580(JDreamIII), CAplus/MEDLINE/EMBASE/BIOSIS(STN)

### C. DOCUMENTS CONSIDERED TO BE RELEVANT

| Category* | Citation of document, with indication, where appropriate, of the relevant passages | Relevant to claim No. |
|---|---|---|
| A | JP 2019-199439 A (UENO FINE CHEM IND LTD.) 21 November 2019 (2019-11-21), example 2 | 1-4 |
| X | US 2014/0329674 A1 (INSCENT, INC.) 06 November 2014 (2014-11-06), whole document, particularly, paragraphs [0004], [0074], [0081], [0267]-[0273] | 3, 4 |
| X | DE 4012224 A1 (HOLTMANN, H.) 17 October 1991 (1991-10-17), whole document, particularly, page 2, lines 3-5, 8-13, 24-26, 30-35, 37, 54, 55, 58, examples 1, 3 | 1-4 |
| Y | | 1-4 |

☒ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 August 2021 | 17 August 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2021/018733

C (Continuation).  DOCUMENTS CONSIDERED TO BE RELEVANT

| Category* | Citation of document, with indication, where appropriate, of the relevant passages | Relevant to claim No. |
|---|---|---|
| X | MALERBO-SOUZA, D. T. et al., Efficiency of n-octyl-acetate,2-heptanone and citronellal in repelling bees from basil (Ocimum sellowii – Labiatae)., Brazilian Archives of Biology and Technology, 2004, vol. 47, no. 1, pp. 121-125, doi: 10.1590/S1516-89132004000100016, whole document, particularly, abstract, p. 122, right column, ll. 24-40, p. 123, right column, ll. 11-17, fig. 1 | 1, 2 |
| Y | NAIK, D. G. et al., Essential oil of Indian propolis: chemical composition and repellency against the honeybee Apis florea., Chemistry and Biodiversity, 2013, vol. 10, no. 4, pp. 649-657, doi: 10.1002/cbdv.201200165, whole document, particularly, abstract, p. 650, ll. 13-7 from the bottom, p. 651, ll. 4-9, p. 654, ll. 6-17, tables 1, 2, fig. 2 | 1-4 |
| X | JP 2007-084441 A (HOSHINO, Kazuyoshi) 05 April 2007 (2007-04-05), whole document, particularly, paragraphs [0001], [0033], [0037], [0038], [0091]-[0095], [0195]-[0201] | 3, 4 |
| X | US 2015/0257384 A1 (BAYER CROPSCIENCE LP) 17 September 2015 (2015-09-17), whole document, particularly, paragraphs [0002], [0008], [0012], examples 1, 2, 6, 7, 9, 11 | 3, 4 |
| X | US 2014/0155261 A1 (INSCENT, INC.) 05 June 2014 (2014-06-05), whole document, particularly, paragraphs [0003], [0045], [0046], [0217]-[0223] | 3, 4 |
| X | ATKINS, E. L. et al., Repellent additives to reduce pesticide hazards to honeybees: laboratory testing., Journal of Apicultural Research, 1975, vol. 14, no. 2, pp. 85-97, doi: 10.1080/00218839.1975.11099808, whole document, particularly, summary, p. 87, l. 9 to p. 95, l. 5, p. 95, l. 9 from the bottom to p. 96, l. 3, tables 1-3 | 1, 2 |
| A | US 2014/0329675 A1 (INSCENT, INC.) 06 November 2014 (2014-11-06), paragraphs [0076], [0186]-[0192] | 1-4 |
| A | MISHRA, S. et al., Efficacy of some chemicals as repellents against two honey bee species, Apis mellifera L. and Apis florea F. in semi-field trials., Journal of Apicultural Science, 2009, vol. 53, no. 1, pp. 53-66, tables 1-10 | 1-4 |
| A | JP 2019-510748 A (FMC CORP.) 18 April 2019 (2019-04-18), paragraphs [0149], [0150], [0177]-[0180] | 1-4 |

Form PCT/ISA/210 (second sheet) (January 2015)

**INTERNATIONAL SEARCH REPORT**

International application No.

PCT/JP2021/018733

C (Continuation).   DOCUMENTS CONSIDERED TO BE RELEVANT

| Category* | Citation of document, with indication, where appropriate, of the relevant passages | Relevant to claim No. |
|---|---|---|
| A | 平泉 貞吉 ほか, シトロネラ油の起泡剤としての利用研究, 日本鑛業會誌, 1943, vol. 59, no. 703, pp. 648-653, doi: 10.11508/shigentosozai1885.59.648, p. 648, right column, ll. 12-14, p. 648, 「シトロネラ油成分比較表」, (HIRAIZUMI, Teikiti et al., Uses of citronella oil as a frothing agent, Journal of the Mining Institute of Japan), non-official translation ("Citronella oil component comparison table") | 1, 2 |

Form PCT/ISA/210 (second sheet) (January 2015)

## INTERNATIONAL SEARCH REPORT

| International application No. |
| --- |
| PCT/JP2021/018733 |

**Box No. II     Observations where certain claims were found unsearchable (Continuation of item 2 of first sheet)**

This international search report has not been established in respect of certain claims under Article 17 (2)(a) for the following reasons:

1. ☐  Claims Nos.:
because they relate to subject matter not required to be searched by this Authority, namely:

2. ☐  Claims Nos.:
because they relate to parts of the international application that do not comply with the prescribed requirements to such an extent that no meaningful international search can be carried out, specifically:

3. ☐  Claims Nos.:
because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
Document 1: JP 2019-199439 A (UENO FINE CHEM IND LTD.) 21 November 2019 (2019-11-21)
Document 2: US 2014/0329674 A1 (INSCENT, INC.) 06 November 2014 (2014-11-06)
Document 3: DE 4012224 A1 (HOLTMANN, H.) 17 October 1991 (1991-10-17)
Document 4: MALERBO-SOUZA, D. T. et al., Efficiency of n-octyl-acetate, 2-heptanone and citronellal in repelling bees from basil (Ocimum sellowii – Labiatae)., Brazilian Archives of Biology and Technology, 2004, vol. 47, no. 1, pp. 121-125, doi: 10.1590/S1516-89132004000100016
Document 5: NAIK, D. G. et al., Essential oil of Indian propolis: chemical composition and repellency against the honeybee Apis florea., Chemistry and Biodiversity, 2013, vol. 10, no. 4, pp. 649-657, doi: 10.1002/cbdv.201200165

1. ☒  As all required additional search fees were timely paid by the applicant, this international search report covers all searchable claims.

2. ☐  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant.   Consequently, this international search report is restricted to the invention first mentioned in the claims; it is covered by claims Nos.:

**Remark on Protest**     ☒  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

**INTERNATIONAL SEARCH REPORT**

International application No.

PCT/JP2021/018733

**Box No. III      Observations where unity of invention is lacking (Continuation of item 3 of first sheet)**

This International Searching Authority found multiple inventions in this international application, as follows:
Document 6: JP 2007-084441 A (HOSHINO, Kazuyoshi) 05 April 2007 (2007-04-05)
Document 7: US 2015/0257384 A1 (BAYER CROPSCIENCE LP) 17 September 2015 (2015-09-17)
Document 8: US 2014/0155261 A1 (INSCENT, INC.) 05 June 2014 (2014-06-05)
Document 9: ATKINS, E. L. et al., Repellent additives to reduce pesticide hazards to honeybees: laboratory testing., Journal of Apicultural Research, 1975, vol. 14, no. 2, pp. 85-97, doi: 10.1080/00218839.1975.11099808
Document 10: US 2014/0329675 A1 (INSCENT, INC.) 06 November 2014 (2014-11-06)
Document 11: MISHRA, S. et al., Efficacy of some chemicals asrepellents against two honey bee species, Apis mellifera L. and Apis florea F. in semi-field trials., Journal of Apicultural Science, 2009, vol. 53, no. 1, pp. 53-66
Document 12: JP 2019-510748 A (FMC CORP.) 18 April 2019 (2019-04-18)

(Invention 1) Inventions in claims 1-4 pertaining to "tetradecane" and "(a) a linear alkane having 6-19 carbon atoms"
     Parts of claims 1 and 2 pertaining to "tetradecane" have the special technical feature of a honeybee repellant comprising tetradecane as an active component, and thus are classified as invention 1.
     Moreover, "(a) a linear alkane having 6-19 carbon atoms" in claims 3 and 4 is a broader concept of "tetradecane", and thus is classified as invention 1.

(Invention 2) Inventions in claims 1-4 pertaining to "furfuryl alcohol, cinnamyl alcohol, borneol, carvacrol" and "(e) an aliphatic alcohol"
     Parts of claims 1 and 2 pertaining to "furfuryl alcohol, cinnamyl alcohol, borneol, carvacrol" and parts of claims 3 and 4 pertaining to "(e) an aliphatic alcohol" share the common technical feature of a honeybee repellant comprising a specific substance as an active component with the parts classified as invention 1 and pertaining to "tetradecane" or "(a) a linear alkane having 6-19 carbon atoms" set forth in claims 1-4.
     However, the technical feature is not considered to make a contribution over the prior art in light of the disclosures in documents 1-12, and thus is not considered to be a special technical feature.
     Moreover, there is no other same or corresponding special technical feature among these inventions.
     Therefore, the parts of claims 1-4 pertaining to "furfuryl alcohol, cinnamyl alcohol, borneol, carvacrol" and "(e) an aliphatic alcohol" cannot be classified as invention 1.
     The parts of claims 1 and 2 pertaining to "furfuryl alcohol, cinnamyl alcohol, borneol, carvacrol" have the special technical feature of a honeybee repellant comprising one or more components selected from furfuryl alcohol, cinnamyl alcohol, borneol and carvacrol as an active component, and thus are classified as invention 2.
     The "(e) aliphatic alcohol" is recognized as a compound having a hydroxy group (alcohol or phenol) similar to "furfuryl alcohol, cinnamyl alcohol, borneol, carvacrol", and thus is classified as invention 2.

     Similarly, the claims are classified as indicated below.

(Invention 3) Inventions in claims 1 and 2 pertaining to "cinnamaldehyde, 3-methy-2-butenal" (inventions pertaining to compounds recognized as aldehyde compounds)
(Invention 4) Inventions in claims 1 and 2 pertaining to "methyl cinnamate, geranyl formate, allyl cyclohexanepropionate" (inventions pertaining to compounds recognized as ester compounds)
(Invention 5) Inventions in claims 1 and 2 pertaining to "isoquinoline, quinoline"

Form PCT/ISA/210 (continuation of first sheet) (January 2015)

**INTERNATIONAL SEARCH REPORT**

International application No.

PCT/JP2021/018733

Box No. III    Observations where unity of invention is lacking (Continuation of item 3 of first sheet)

This International Searching Authority found multiple inventions in this international application, as follows:
(Invention 6) Inventions in claims 1 and 2 pertaining to "δ-dodecalactone, β-ionone" (inventions pertaining to compounds recognized as ketone compounds)
(Invention 7) Inventions in claims 1 and 2 pertaining to "butylamine" (inventions pertaining to compounds recognized as amine compounds)
(Invention 8) Inventions in claims 1 and 2 pertaining to "citronella oil" (inventions pertaining to compounds recognized as extracts)
(Invention 9) Inventions in claims 3 and 4 pertaining to "(b) a furan compound", "(c) a furanone compound having an unsaturated bond" and "(d) a pyrrole compound having 6 or more carbon atoms" (inventions pertaining to compounds recognized as compounds containing a heterocyclic ring having a 5-membered ring structure that has one heteroatom in the ring)

Form PCT/ISA/210 (continuation of first sheet) (January 2015)

**INTERNATIONAL SEARCH REPORT**
Information on patent family members

International application No.

PCT/JP2021/018733

```
JP 2019-199439 A    21 November 2019    (Family: none)

US 2014/0329674 A1 06 November 2014     WO 2014/179785 A1

DE 4012224 A1       17 October 1991     (Family: none)

JP 2007-084441 A    05 April 2007       (Family: none)

US 2015/0257384 A1 17 September 2015    WO 2014/146145 A1
                                        EP 2967041 A1

US 2014/0155261 A1 05 June 2014         WO 2012/151556 A2

US 2014/0329675 A1 06 November 2014     WO 2014/179786 A1

JP 2019-510748 A    18 April 2019       US 2020-0163334 A1
                                        paragraphs [0149], [0150], [0177]-[0179]
                                        WO 2017/151549 A1
                                        EP 3422853 A1
```

Form PCT/ISA/210 (patent family annex) (January 2015)

**REFERENCES CITED IN THE DESCRIPTION**

**Patent documents cited in the description**

- JP 2019199439 A

- JP 2019069934 A

**Non-patent literature cited in the description**

- Organic Chemicals in the Explanatory Notes to the Customs Tariff Schedule. Customs and Tariff Bureau of the Ministry of Finance, 28 November 2016